# FASCICULE DE BREVET EUROPEEN

(11) **EP 0 951 122 B1**
(45) Date de publication et mention de la délivrance du brevet: **18.07.2007**
(21) Numéro de dépôt: 99410034.5
(22) Date de dépôt: 12.04.1999
(51) Int. Cl.: H02B 11/133, H01H 3/30

(54) **Dispositif de commande de la décharge et du débrayage d'un accumulateur d'énergie lors de l'extraction d'un disjoncteur débrochable**
Steuergerät für die Entladung und Entkupplung eines Energieakkumulators während des Trennens eines trennbaren Schalters
Control device for the discharge and the decoupling of an energy accumulator during the disconnection of a disconnectable circuit breaker

(30) Priorité: 17.04.1998 FR 9805119
(43) Date de publication de la demande: 20.10.1999
(73) Titulaire: SCHNEIDER ELECTRIC INDUSTRIES SAS, 92500 Rueil-Malmaison (FR)
(72) Inventeur: Morel, Robert, 38050 Grenoble cedex 09 (FR); Grelier, Claude, 38050 Grenoble cedex 09 (FR); Pinero, Eric, 38050 Grenoble cedex 09 (FR)
(74) Mandataire: Ritzenthaler, Jacques

(56) Documents cités:
- EP-A- 0 048 042
- EP-A- 0 222 645
- EP-A- 0 227 586
- GB-A- 799 665

## Description

L'invention concerne un disjoncteur du genre décrit dans le document EP-A-0 222 645, comportant au moins une paire de contacts dont l'un au moins est mobile et peut prendre par rapport à l'autre une position de fermeture correspondant au contact mécanique et électrique et une position d'ouverture, ce disjoncteur étant du type équipé d'un dispositif de fermeture muni d'un accumulateur d'énergie.

On a représenté sur les figures 1 à 3 un pôle 10 d'un disjoncteur 1 connu de ce type et son mécanisme d'ouverture 20, les figures 4 et 5 représentant quant à elles un mécanisme d'armement et de fermeture 30 de ce disjoncteur, respectivement en position désarmée et armée.

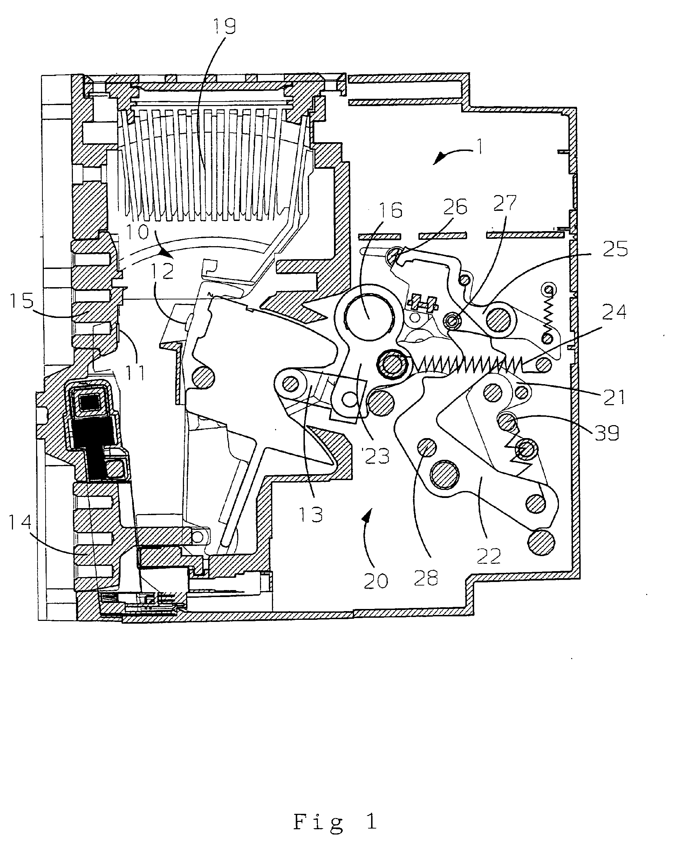

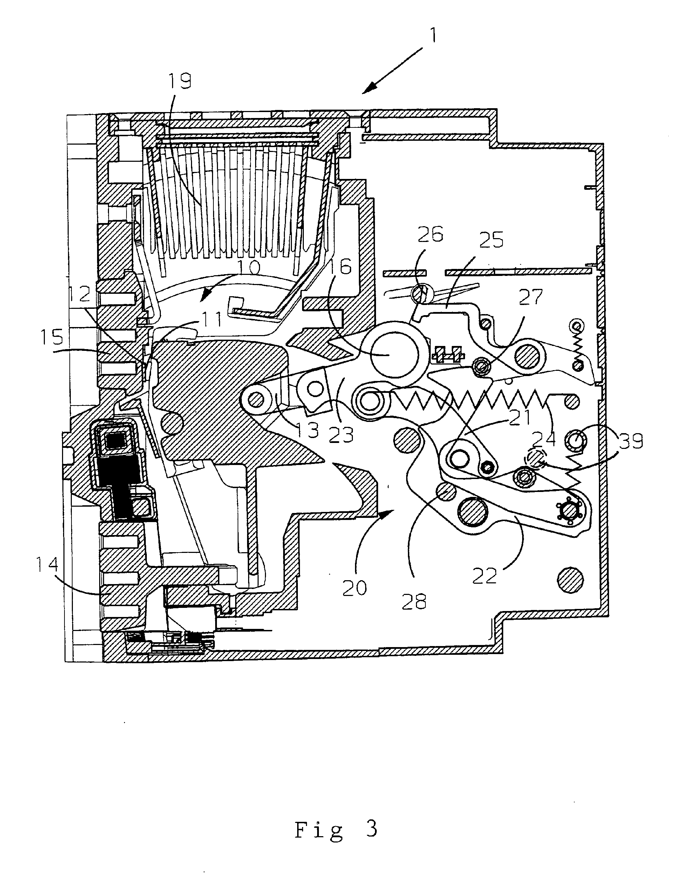

Le pôle 10 comporte de manière classique une paire de contacts de coupure 11, 12. Le contact 11 est fixe et le contact 12 est monté pivotant entre une position d'ouverture visible sur la figure 1, dans laquelle il est éloigné du contact fixe, et une position de fermeture visible sur la figure 3, dans laquelle le contact mécanique et électrique entre les contacts 11 et 12 est établi. Le pôle 10 comporte également une chambre d'extinction d'arc 19 et une paire de bornes principales 14, 15 faisant saillie de la face arrière du disjoncteur 1 et destinées à venir s'embrocher par l'intermédiaire de pinces d'embrochage sur des plages de raccordement. Le disjoncteur 1 comporte une pluralités de pôles 10 disposés dans des plans parallèles, perpendiculaires à un arbre des pôles 16 qui leur est commun. L'ordre de fermeture ou d'ouverture des pôles est transmis à chaque contact mobile 12 par l'intermédiaire d'une bielle 13 coopérant avec un levier solidaire de l'arbre des pôles 16.

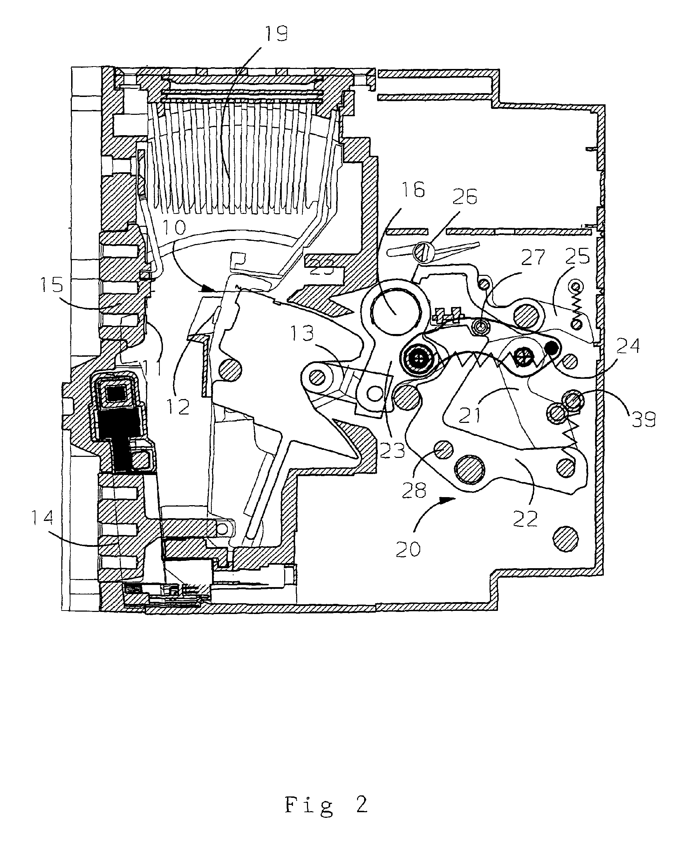

Le mécanisme d'ouverture 20 comporte un mécanisme à genouillère 21 avec deux biellettes articulées l'une à l'autre par un axe de pivotement. L'une des biellettes est accouplée mécaniquement à une manivelle 23 de l'arbre des pôles commune à l'ensemble des pôles, cette manivelle formant par ailleurs l'un des leviers coopérant avec les bielles 13. L'autre biellette est articulé en rotation à un crochet de déclenchement 22 monté pivotant sur un axe fixe. Un ressort d'ouverture 24 est ancré entre la manivelle 23 et un taquet fixe de retenue, et tend à rappeler la manivelle 23 vers sa position d'ouverture montrée en figure 1, dans le sens direct (sens contraire à celui des aiguilles d'une montre) sur cette figure. Un cliquet d'ouverture 25 formé par un levier pivotant autour d'un axe fixe, est piloté par un verrou d'ouverture 26 en forme de demi-lune. Le cliquet 25 est rappelé par un ressort dans un sens l'éloignant de la demi-lune et le rapprochant du crochet 22. Le verrou d'ouverture 26 est rappelé vers sa position verrouillée. En d'autres termes, la demi-lune est rappelée par un ressort dans un sens s'opposant à la rotation du cliquet 25 comme on le voit sur les figures 2 et 3. Un galet 27 ménagé sur le cliquet d'ouverture 25 entre ses extrémités est apte à coopérer avec un évidement en forme de V du crochet de déclenchement 22, dans les positions des figures 2 et 3. Le crochet 22 est rappelé par un ressort dans un sens direct sur la figure 1, tendant à raccourcir la distance entre l'axe d'articulation du mécanisme à genouillère 21 sur le crochet 22 et l'axe d'articulation du mécanisme à genouillère 21 sur la manivelle 23.

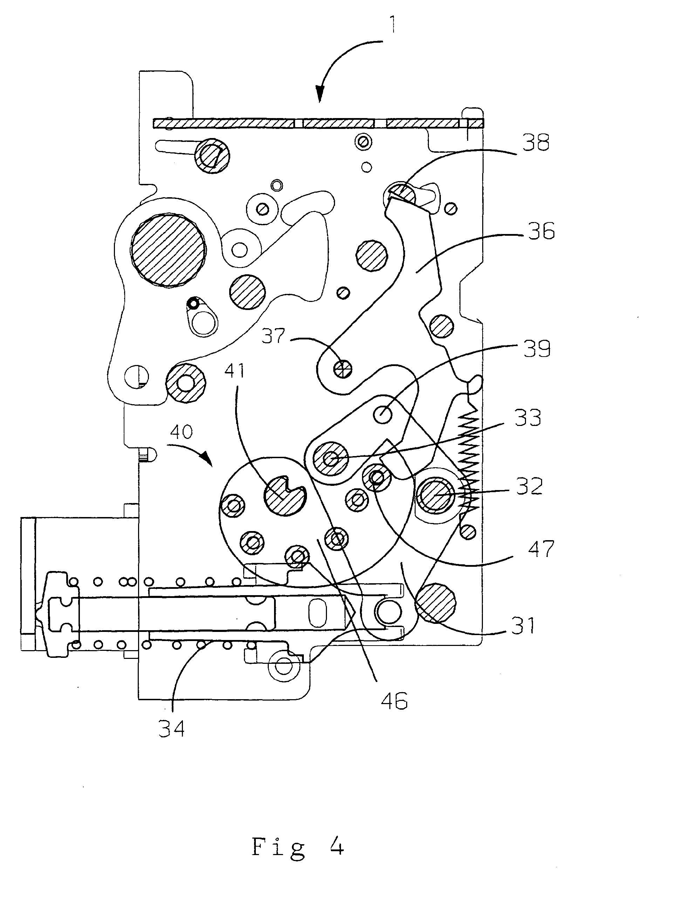

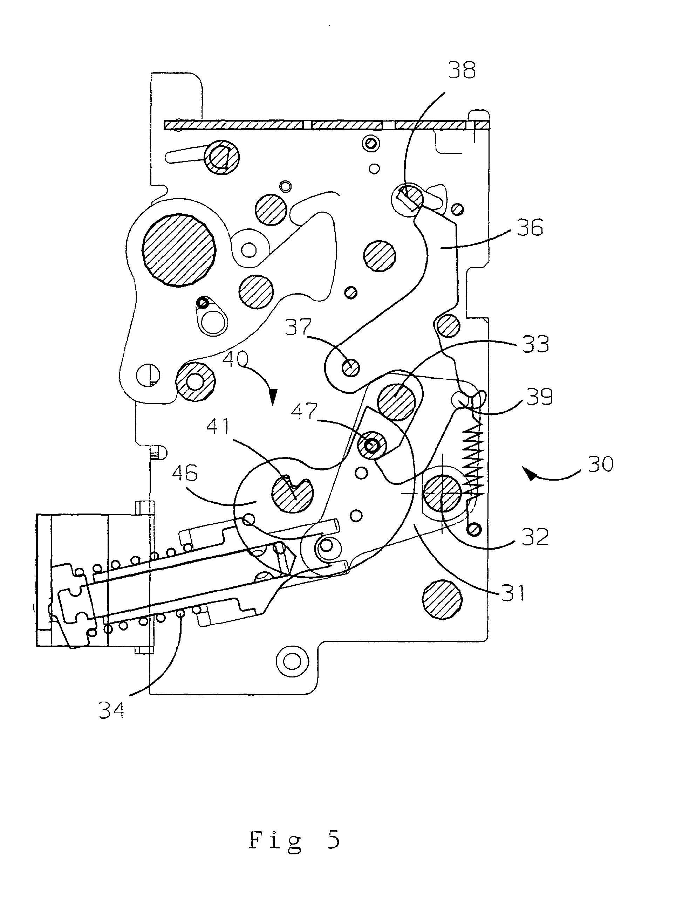

Le mécanisme d'armement et de fermeture 30 est représenté sur la figure 4 dans son état désarmé. Ce mécanisme comporte un levier entraîneur 31 monté pivotant autour d'un axe fixe 32. Un dispositif élastique d'accumulation d'énergie comprenant au moins un ressort de fermeture 34 est monté pivotant du côté d'une de ses extrémités sur un point fixe et du côté de l'autre de ses extrémités à un doigt du levier entraîneur 31. Le levier entraîneur porte un galet 33 destiné à coopérer avec une came d'armement 46 clavetée sur un arbre 41 d'un mécanisme d'entraînement. La came 46 comporte un galet 47 apte à coopérer avec un cliquet de fermeture 36 qui est monté pivotant autour d'un axe fixe 37. Un verrou de fermeture 38 en forme de demi-lune est apte à verrouiller le cliquet 36 dans la position de la figure 5. Ce verrou 38 est rappelé élastiquement par un ressort vers sa position de fermeture. Le cliquet 36 est lui-même rappelé par un ressort vers sa position verrouillée représentée sur la figure 5.

Le mécanisme d'ouverture et le mécanisme d'armement et de fermeture sont montés sur un ou plusieurs flasques constituant un support fixe et les deux plans de projection des figures 1 à 3 d'une part et des figures 4 et 5 de l'autre sont disposés approximativement parallèlement l'un à l'autre. Une liaison entre le mécanisme d'ouverture et le mécanisme d'armement et de fermeture est obtenue par un doigt 39 solidaire du levier entraîneur 31 et destiné à coopérer avec le mécanisme à genouillère 21, ce doigt s'étendant suivant un axe essentiellement perpendiculaire aux plans de coupe des figures 1 et 4. Le mécanisme d'ouverture et le mécanisme d'armement et de fermeture sont tout deux munis de butées de fin de course visibles sur les figures.

Les séquences d'ouverture et de fermeture du disjoncteur peuvent être schématisées à partir des figures 1 à 5. Sur la figure 4, le mécanisme d'armement et de fermeture est dans son état désarmé: le ressort de fermeture 34 est détendu; le galet 47 bute contre le cliquet de fermeture 36; la demi lune de fermeture est ouverte et coopère également avec le cliquet de fermeture 36. On passe de l'état désarmé de la figure 4 à l'état armé de la figure 5 par rotation de l'arbre 41 et de la came 46 dans le sens rétrograde (c'est-à-dire le sens des aiguilles d'une montre) sur les figures. Dans un premier temps, le galet 47 libère le cliquet 36 qui vient sous la force de son ressort de rappel dans la position représentée sur la figure 5. Simultanément, le verrou de fermeture 38 se referme sous l'action de son ressort de rappel et verrouille le cliquet 36 en position. La came 46, en continuant sa rotation, vient en contact avec le galet 33 du levier entraîneur 31, entraînant celui-ci en rotation dans le sens rétrograde, jusqu'à la position de la figure 5. Dans sa rotation, le levier entraîneur bande le ressort 34. Dans la position atteinte sur la figure 5, la came a dépassé un point mort et est devenue réceptrice: le galet 33 a atteint une zone de la came dans laquelle il sollicite celle-ci dans le sens rétrograde, alors que le cliquet 36 constitue une butée pour le galet 47 et s'oppose à tout mouvement dans le sens rétrograde. Le mécanisme est alors armé.

La détente impulsionnelle du ressort de fermeture 34 est obtenue par le déverrouillage du verrou 38. En effet, ce déverrouillage libère le cliquet 36 sollicité par le galet 47 de la came 46. La came 46, elle-même sollicitée par le galet 33 du levier entraîneur 31, tourne dans le sens rétrograde et libère totalement le galet 33, entraînant la rotation impulsive du levier entraîneur dans le sens direct sous l'impulsion du ressort 33 se détendant. Le mécanisme se retrouve en fin de la phase de détente du ressort de fermeture dans la position montrée sur la figure 4.

La phase d'armement et la phase de détente du ressort de fermeture peuvent être effectuées quel que soit l'état du mécanisme d'ouverture. Durant la phase d'armement, le doigt 39 pivote dans le sens rétrograde autour de l'axe 32. Inversement, durant la phase de détente, le doigt 39 pivote dans le sens direct et revient à sa position précédente.

Ces pivotements du doigt 39 ont des effets différents sur le mécanisme d'ouverture suivant que celui-ci est initialement ouvert ou fermé.

L'appareil ouvert désarmé est représenté sur la figure 1. Le doigt 39 est alors en butée contre un renfoncement d'une des biellettes du mécanisme à genouillère 21 et s'oppose à la rotation du crochet 22 dans le sens direct sous la sollicitation de son ressort de rappel. La rotation du doigt 39 durant la phase d'armement libère le mécanisme à genouillère 21 et le crochet 22 qui viennent progressivement prendre la position représentée sur la figure 2 sous la sollicitation du ressort de rappel du crochet: le crochet 22 a tourné dans le sens direct et la distance entre les extrémités du mécanisme à genouillère a diminuée. Le crochet, en coopérant avec la butée 27 du cliquet 25, permet la rotation du cliquet 25 dans le sens direct sous la sollicitation de son ressort de rappel, jusqu'à ce que le cliquet dépasse la demi-lune du verrou d'ouverture 26. Le verrou se referme alors sous la sollicitation de son propre ressort de rappel et interdit le retour du cliquet d'ouverture 25 dans le sens rétrograde. Le crochet 22, en achevant sa rotation, vient se placer de telle manière que son renfoncement en V coopère avec la butée 27 du cliquet 25 et est bloqué en position par celle-ci, tel que représenté sur la figure 2. Le mécanisme d'ouverture est alors en position ouverte armée.

La détente du ressort de fermeture provoque, on l'a dit, la rotation du doigt 39 qui suit une trajectoire inverse à la précédente. Ce faisant, le doigt 39 entraîne une des biellettes du mécanisme à genouillère 21. Le crochet 22 est bloqué en position par la butée 27 du cliquet d'ouverture 25. L'axe d'articulation du mécanisme à rotule 21 sur le crochet 22 reste donc fixe et c'est l'axe d'articulation du mécanisme à rotule sur la manivelle 23 qui est contraint de se déplacer, entraînant ainsi la manivelle 23, l'arbre des pôles 16, les leviers, biellettes 13 et contacts mobiles 12 des différents pôles vers leur position de fermeture. Le ressort d'ouverture 24 est quant à lui automatiquement bandé lors de la fermeture des pôles du fait du mouvement de son point d'attache à la manivelle 23. A la fin de cette phase, l'appareil est fermé et désarmé. Le mécanisme d'ouverture se trouve dans la position représentée sur la figure 3, avec le doigt 39 dans sa position en traits interrompus. Le mécanisme à genouillère 21 a légèrement dépassé son point mort, ce qui signifie que l'axe d'articulation entre les biellettes du mécanisme à genouillère est passé d'un côté à l'autre d'un plan contenant les deux autres axes d'articulation du mécanisme à genouillère, que l'une des biellettes vient en butée contre une butée de fin de course 28 solidaire du crochet 22 et qu'il n'y a plus de coopération entre le doigt 39 et le mécanisme à genouillère 21.

Si, à partir de la position fermée désarmée, on déverrouille le verrou d'ouverture 26, on aboutit à la position de la figure 1, de la manière suivante: l'ouverture de la demi-lune du verrou 26 libère le cliquet d'ouverture 25 et par voie de conséquence le crochet 22. Sous la sollicitation du ressort d'ouverture 24, le mécanisme à genouillère 21 sollicite le crochet 22 à la fois au niveau de son articulation commune avec le crochet 22 et au niveau de la butée de fin de course 28. De cette sollicitation résulte globalement un couple provoquant la rotation du crochet 22 dans le sens rétrograde, ce qui abaisse l'axe d'articulation du mécanisme à genouillère sur le crochet, refait passer le mécanisme à genouillère par son point mort et lui permet de se replier jusqu'à la position de la figure 1, le mécanisme à genouillère 21 arrivant en butée contre le doigt 39 en position désarmée.

On peut également, toujours à partir de la position fermée désarmée, réarmer le mécanisme d'armement alors que les pôles restent fermés, ce qui amène le mécanisme dans sa position fermée armée, et le doigt 39 dans la position en traits pleins sur la figure 3. Suite à cette manoeuvre de réarmement, l'ouverture du verrou d'ouverture amène le mécanisme d'ouverture à la position ouverte armée de la figure 2, par une séquence semblable à la séquence d'ouverture décrite précédemment, excepté le fait que le mouvement de pliage du mécanisme à genouillère n'est pas arrêté par la butée et peut se poursuivre, entraînant avec lui le crochet 22, qui permet de nouveau la rotation du cliquet 25 dans le sens direct sous la sollicitation de son ressort de rappel, jusqu'à ce que le cliquet dépasse la demi-lune du verrou d'ouverture 26. Le verrou 26 se referme alors sous la sollicitation de son ressort de rappel et le crochet, en achevant sa rotation, vient se replacer dans la position représentée sur la figure 2. Le mécanisme d'ouverture est alors en position ouverte armée.

On voit donc que l'on peut, à partir de la position fermée armée de la figure 3, réaliser consécutivement une ouverture qui amène à la figure 2, une fermeture qui amène à la figure 3, traits interrompu et une ouverture qui amène à la position de la figure 1, ceci sans réarmer le dispositif d'armement. Cette séquence - ouverture, fermeture, ouverture (OFO)-est caractéristique de ce type de disjoncteur.

L'invention concerne plus précisément ce type de disjoncteur, lorsqu'il est monté en variante débrochable, c'est-à-dire intégré à un appareillage de coupure comportant un châssis dit fixe et le disjoncteur mobile par rapport au châssis fixe entre une position extraite et une position embrochée. Le châssis est généralement conformé en caisson et comprend une ouverture en face avant autorisant l'introduction du disjoncteur, ainsi que des glissières assurant son support et son guidage entre la position extraite et la position embrochée. La position extraite est celle dans laquelle on peut désolidariser le disjoncteur des glissières du châssis. La position embrochée est celle dans laquelle les bornes de le disjoncteur sont solidarisée aux bornes correspondantes du châssis, elles-mêmes raccordées au circuit électrique, par exemple par un jeu de barres extérieures. On distingue généralement des positions intermédiaires entre la position extraite et la position embrochée, et notamment, en partant de la position extraite, une position dite débrochée dans laquelle aucun contact électrique n'existe entre le disjoncteur et le châssis mais à partir de laquelle une chaîne cinématique de transmission devient active pour le déplacement ultérieur du disjoncteur vers la position embrochée, et une position dite de test, dans laquelle les circuits principaux du disjoncteur, à savoir les bornes dont il a été question plus haut, sont déconnectés mais des circuits électriques auxiliaires sont connectés au châssis. Certaines positions intermédiaires peuvent être confondues entre elles ou avec les positions extrêmes: par exemple, la position extraite avec la position débrochée, ou la position débrochée avec la position test. La chaîne cinématique de transmission servant au déplacement de la partie mobile du disjoncteur entre la position débrochée et la position embrochée est généralement entraînée par une manivelle amovible manipulée par l'opérateur. Elle peut également être motorisée.

Pour ce type d'appareillage en variante débrochable, l'usage impose que les manipulations qui permettront l'extraction du disjoncteur de son châssis donnent lieu à des séquences automatiques afin que le disjoncteur en fin de phase d'extraction soit ouvert et désarmé. Cet usage correspond à un soucis d'éviter tout risque d'accident pour l'opérateur qui aurait à manipuler ou démonter le disjoncteur.

Traditionnellement, les constructeurs, pour arriver à ce résultat, font en sorte que le verrou d'ouverture et le verrou de fermeture soient tout deux placés dans leur position déverrouillée, aussi longtemps que l'appareil n'est pas entre la position débrochée et la position embrochée. Un appareillage de ce type est décrit par exemple dans le document EP-A-0 227 586. Cette solution n'est entièrement satisfaisante ni du point de vue de la prévention des risques d'accidents, ni du point de vue de la fiabilité des appareillages.

Du point de vue de fiabilité de l'appareillage, il faut souligner que la séquence d'extraction selon l'état de la technique comporte deux étapes: la première est un déverrouillage du verrou d'ouverture, la deuxième un déverrouillage du verrou de fermeture alors que le verrou d'ouverture est maintenu ouvert. Cette deuxième étape engendre une séquence de fonctionnement, dite décharge à vide ou décharge sur pôles ouverts, qui diffère des séquences décrites jusqu'ici. En effet, si le disjoncteur se trouve préalablement dans son état fermé armé, l'ordre d'ouverture l'amène dans tout d'abord dans un état ouvert, armé, qui diffère de celui de la figure 2 par le fait que le verrou d'ouverture est maintenu en position déverrouillée. L'ordre de fermeture des pôles, c'est-à-dire de déverrouillage du verrou de fermeture, libère ensuite le galet 33, provoquant la rotation impulsive du levier entraîneur 31 et de son doigt 39. Du fait de l'absence de verrouillage du cliquet d'ouverture 25, le crochet 22 est libre en rotation et est ramené directement dans la position de la figure 1. L'excès d'énergie cinétique est absorbé par les butées de fin de course du crochet, alors que dans un cycle normal, cette butée n'absorbe qu'une énergie faible. Cette décharge à vide implique donc que soit surdimensionné l'appareillage ou que soit sacrifiée son endurance.

Dans le matériel de l'état de la technique en position extraite, les verrous d'ouverture et de fermeture sont maintenus ouverts. Il est cependant toujours possible de manoeuvrer le levier de réarmement qui agit sur la came de réarmement. En fin de course d'armement, lorsque le galet 47 de la came 46 arrive en contact avec le cliquet de fermeture 36, il n'y a pas de blocage de la came, du fait que le cliquet n'est pas bloqué en rotation. La rotation de la came se poursuit donc et l'on obtient une décharge à vide.

Un des objectifs de la présente invention est donc de limiter les cycles de décharge à vide ou de les éviter tout à fait, par un dispositif simple et économique.
Selon un premier aspect de l'invention, ce problème est résolu avec un appareillage de coupure débrochable comportant un châssis fixe et un disjoncteur mobile dans le châssis fixe entre une position débrochée et une position embrochée, le disjoncteur comportant au moins une paire de contacts dont l'un au moins est mobile et peut prendre par rapport à l'autre une position de fermeture et une position d'ouverture, un mécanisme d'armement et de fermeture comportant un ressort dit de fermeture apte à passer d'un état armé à un état libéré, un verrou dit de fermeture apte à verrouiller le ressort de fermeture dans son état armé, le ressort de fermeture étant associé au contact mobile de façon à ce que la détente du ressort de fermeture entraîne le contact mobile vers sa position de fermeture, un mécanisme d'entraînement comportant un organe menant, appareillage dont le mécanisme d'entraînement comporte un mécanisme déclencheur qui est apte à passer d'un état d'enclenchement dans lequel l'actionnement de l'organe menant est apte à amener le ressort de fermeture dans son état armé, à un état de déclenchement dans lequel l'actionnement de l'organe menant n'est pas apte à amener le ressort de fermeture dans son état armé. Lorsque le mécanisme déclencheur est dans son état de déclenchement, il n'est plus possible d'armer le ressort de fermeture. Par conséquent le risque de décharge à vide par manoeuvre de l'organe menant du mécanisme d'entraînement, est éliminé aussi bien lors de l'extraction qu'une fois le disjoncteur extrait. Outre la préservation du matériel, ce mécanisme déclencheur apporte par ailleurs un avantage décisif pour la sécurité des personnes. En effet, les appareillages de l'état de la technique en position extraite, avec les verrous d'ouverture et de fermeture ouverts, ne sont pas sans danger. Il est notamment possible d'agir sur l'organe menant du dispositif d'armement du disjoncteur, en l'occurrence le levier oscillant d'armement, de manière à bander partiellement le ressort de fermeture, en deçà du point mort de la came d'armement 46. L'état du mécanisme d'armement partiellement réarmé est stable, puisque l'accouplement à roue libre s'oppose à la force exercée par le ressort. L'opérateur chargé de la maintenance de l'appareil peut donc se trouver à son insu devant un disjoncteur dont le ressort de fermeture est partiellement bandé. L'ouverture de l'appareillage dans cet état est potentiellement dangereuse ainsi que sa manipulation, d'autant plus que la moindre action sur le levier de réarmement peut faire dépasser le point mort et entraîner la décharge brusque du ressort de fermeture. De ce point de vue, le mécanisme déclencheur, dans sa position de déclenchement, empêche toute action sur la came d'armement et tout réarmement même partiel du ressort de fermeture.

Le mécanisme déclencheur peut être placé dans son état de déclenchement par une commande manuelle. Toutefois, il est préférable de munir l'appareillage d'un moyen de commande du mécanisme déclencheur, apte à détecter le fait que le disjoncteur passe par une position intermédiaire dite de déclenchement entre la position débrochée et la position extraite, dans le sens de l'extraction, et faire passer dans ce cas le mécanisme déclencheur dans son état de déclenchement, ainsi que d'un moyen de commande du verrou de fermeture apte à détecter le fait que le disjoncteur passe par une position intermédiaire dite de fermeture entre la position débrochée et la position extraite, dans le sens de l'extraction, et à entraîner dans ce cas le verrou de fermeture vers sa position de déverrouillage, la position intermédiaire de déclenchement étant située entre la position débrochée et la position intermédiaire de fermeture, ou étant sensiblement confondue avec cette dernière. Le séquencement obtenu permet d'interdire toute manoeuvre de réarmement involontaire du ressort de fermeture après le déverrouillage du verrou de fermeture.

De manière préférentielle, la position intermédiaire de fermeture et la position intermédiaire de déclenchement sont sensiblement confondues et, par ailleurs, le moyen de commande du verrou de fermeture et le moyen de commande du mécanisme déclencheur ont en commun un élément mobile supporté par le disjoncteur entre une position passive et une position de commande de déclenchement, et au moins une came supportée par le châssis fixe, l'élément mobile coopérant avec une surface de commande de déclenchement de la came de façon à passer de sa position passive à sa position de commande de déclenchement lors du passage du disjoncteur par la position intermédiaire commune de fermeture et de déclenchement, dans le sens de l'extraction. Cette disposition permet d'obtenir un dispositif particulièrement économique et de montage simple.

De manière préférentielle, l'appareillage comporte en outre d'une part un mécanisme d'ouverture comportant un ressort dit d'ouverture apte à passer d'un état armé à un état libéré et de l'état libéré à l'état armé, et un verrou dit d'ouverture apte à verrouiller le ressort d'ouverture dans son état armé, le ressort d'ouverture étant associé au contact mobile de façon à ce que la détente du ressort d'ouverture entraîne le contact mobile vers une position d'ouverture et à ce que le déplacement du contact mobile vers sa position de fermeture entraîne l'armement du ressort d'ouverture, et d'autre part un moyen de commande du verrou d'ouverture apte à détecter le fait que le disjoncteur passe par une position intermédiaire dite de première ouverture entre la position débrochée et la position de déclenchement, dans le sens de l'extraction, et à entraîner dans ce cas le verrou d'ouverture vers sa position de déverrouillage, le moyen de commande du verrou d'ouverture et le moyen de commande du mécanisme déclencheur ayant en commun un élément mobile supporté par le disjoncteur entre une position passive et une position de commande de déclenchement, en passant par une position de commande de première ouverture située entre les deux autres et au moins une came supportée par le châssis fixe, l'élément mobile coopérant avec une surface de commande de première ouverture de la came de façon à passer de sa position passive à sa position de commande de première ouverture lors du passage du disjoncteur par la position intermédiaire d'ouverture, dans le sens de l'extraction, l'élément mobile coopérant avec une surface de commande de déclenchement de la came de façon à passer de sa position de première ouverture à sa position de commande de déclenchement lors du passage du disjoncteur par la position intermédiaire de déclenchement, dans le sens de l'extraction. Cette disposition permet d'accroître encore la simplicité, en limitant le nombre de pièces et en facilitant le montage et les réglages. Suivant que le verrou d'ouverture est apte à reprendre ou non sa position fermée après le passage par la position de première ouverture, l'ordre de fermeture au passage du disjoncteur par la position intermédiaire de fermeture exclut ou non la possibilité d'une décharge à vide. L'élément mobile peut d'ailleurs être commun à la commande d'ouverture, à la commande de déclenchement et à la commande de fermeture, ce qui permet encore plus de limiter le nombre de pièces et de faciliter les réglages.

Préférentiellement, l'organe menant est rotatif, le mécanisme d'entraînement comprend au moins un embrayage à roue libre apte à transmettre le mouvement de l'organe menant dans un sens de rotation de celui-ci et à ne pas le transmettre dans l'autre sens de rotation, et le mécanisme déclencheur dans son état de déclenchement est apte à neutraliser ledit embrayage à roue libre de sorte que la rotation de l'organe menant ne soit transmise dans aucun des deux sens de rotation. Ce mode de réalisation permet de débrayer totalement l'organe menant, constitué généralement par un levier oscillant. Plus précisément, l'embrayage à roue libre comporte au moins au moins une pièce mobile entre une position d'enclenchement dans laquelle elle permet la transmission du mouvement de l'organe menant et une position de déclenchement dans laquelle elle ne permet pas la transmission du mouvement de l'organe menant et le mécanisme déclencheur comprend un verrou de blocage de ladite pièce mobile de l'embrayage à roue libre en position de déclenchement.

Suivant une autre variante de réalisation, le mécanisme d'entraînement comporte un organe mené rotatif et au moins un accouplement à roue libre apte à interdire la rotation de l'organe mené dans un sens, et le mécanisme déclencheur dans son état de déclenchement est apte à neutraliser ledit accouplement à roue libre de sorte que la rotation de l'organe mené soit possible dans les deux sens. Cette variante permet de débander le ressort de fermeture quand celui-ci se trouve dans un état partiellement bandé, entre son état libéré et son état armé. En effet, dans cet état intermédiaire, le déverrouillage du verrou de fermeture n'a pas d'effet sur le ressort de fermeture. La neutralisation de l'accouplement à roue libre permet la rotation de la came dans le sens inverse au sens de l'armement et ainsi la détente du ressort de fermeture. Cette variante peut utilement être combinée à la précédente. En effet, en débrayant l'organe menant du mécanisme d'entraînement avant de neutraliser l'accouplement à roue libre, on permet la détente du ressort de fermeture partiellement bandé, tout évitant que son énergie soit transmise à l'organe menant.
Selon un autre aspect de l'invention, le problème est résolu avec un appareillage électrique comportant un châssis fixe et un disjoncteur mobile dans le châssis fixe entre une position débrochée et une position embrochée, le disjoncteur comportant au moins une paire de contacts dont l'un au moins est mobile et peut prendre par rapport à l'autre une position de fermeture et une position d'ouverture, un mécanisme d'armement et de fermeture comportant un ressort dit de fermeture apte à passer d'un état armé à un état libéré, un verrou dit de fermeture apte à verrouiller le ressort de fermeture dans son état armé, le ressort de fermeture étant associé au contact mobile de façon à ce que la détente du ressort de fermeture entraîne le contact mobile vers sa position de fermeture, un mécanisme d'ouverture comportant un ressort dit d'ouverture apte à passer d'un état armé à un état libéré et de l'état libéré à l'état armé, et un verrou dit d'ouverture apte à verrouiller le ressort d'ouverture dans son état armé, le ressort d'ouverture étant associé au contact mobile de façon à ce que la détente du ressort d'ouverture entraîne le contact mobile vers une position d'ouverture et à ce que le déplacement du contact mobile vers sa position de fermeture entraîne l'armement du ressort d'ouverture, ledit appareillage comportant un moyen de commande du verrou d'ouverture apte à détecter le fait que le disjoncteur passe par une position intermédiaire dite de première ouverture entre la position débrochée et la position extraite, dans le sens de l'extraction, et à entraîner dans ce cas le verrou d'ouverture vers sa position de déverrouillage et un moyen de commande du verrou de fermeture apte à détecter le fait que le disjoncteur passe par une position intermédiaire dite de fermeture entre la position de première ouverture et la position extraite, dans le sens de l'extraction, et à entraîner dans ce cas le verrou de fermeture vers sa position de déverrouillage, appareillage dont le verrou d'ouverture est apte à repasser dans sa position de verrouillage avant que le disjoncteur ne passe par sa position intermédiaire de fermeture, dans le sens de l'extraction, ledit moyen de commande du verrou d'ouverture étant apte en outre à détecter le fait que le disjoncteur passe par une position intermédiaire dite de deuxième ouverture entre la position de fermeture et la position extraite, dans le sens de l'extraction, et à entraîner dans ce cas le verrou d'ouverture vers sa position de déverrouillage. En modifiant ainsi le séquencement des commandes de fermeture et d'ouverture lors de l'extraction, on évite le cycle de décharge à vide de l'état de la technique, puisqu'on le remplace par un cycle OFO complet. Le fait que le cycle de décharge OFO soit piloté par le positionnement du disjoncteur dans le châssis de l'appareillage rend la mise en oeuvre du dispositif très souple. En particulier, si pour certains usages, le cycle de décharge OFO n'est pas souhaité, il est possible par des modifications très simples des moyens de commandes, de choisir une autre séquence de décharge. Préférentiellement, le moyen de commande du verrou d'ouverture est apte à détecter le fait que le disjoncteur passe par la position intermédiaire de deuxième ouverture dans le sens de l'embrochage, et à entraîner dans ce cas le verrou d'ouverture vers sa position de déverrouillage, le verrou d'ouverture étant apte à repasser dans sa position de verrouillage avant que le disjoncteur ne passe par sa position intermédiaire de fermeture, dans le sens de l'embrochage, le moyen de commande du verrou de fermeture étant apte à détecter le fait que le disjoncteur passe par la position intermédiaire dite de fermeture dans le sens de l'embrochage, et à entraîner dans ce cas le verrou de fermeture vers sa position de déverrouillage, et le moyen de commande du verrou d'ouverture étant apte à détecter le fait que le disjoncteur passe par la position intermédiaire de première ouverture dans le sens de l'embrochage, et à entraîner dans ce cas le verrou d'ouverture vers sa position de déverrouillage. Ceci permet d'éviter les décharges à vides également lors de l'embrochage.

Préférentiellement, cette séquence OFO lors de l'extraction est combinée avec un mécanisme déclencheur du type précédemment décrit. Cette combinaison permet d'éviter les décharges à vide à la fois durant l'extraction et sur le disjoncteur extrait.

En pratique, les moyens de commande des verrous d'ouverture et de fermeture et du mécanisme déclencheur comportent une ou plusieurs cames ou surfaces de contact solidaires du châssis de l'appareillage, coopérant avec des éléments mobiles suiveurs, par exemple des leviers ou des tiroirs, transmettant l'information directement ou par l'intermédiaire d'une tringlerie aux mécanismes concernés, à savoir le verrou d'ouverture, le verrou de fermeture et le mécanisme déclencheur. Il est donc possible, en modifiant les surfaces de contact des cames ou en limitant la course des éléments mobiles suiveurs par des butées de fin de course, de retarder au stade de la mise en fonction de l'appareil le choix entre un fonctionnement selon l'invention et un fonctionnement classique.

D'autres avantages de l'invention ressortiront de la description qui va suivre de différents modes de réalisation de l'invention, donnés à titre d'exemples non limitatifs et représentés aux dessins annexés dans lesquels :
- la figure 1, déjà commentée, représente un pôle ouvert et son mécanisme d'ouverture en position ouverte et désarmée, dans une réalisation commune à l'état de la technique et à l'ensemble des modes de réalisation de l'invention;
- la figure 2 représente le pôle de la figure 1 en position ouverte et son mécanisme d'ouverture en position ouverte armée;
- la figure 3 représente le pôle de la figure 1 en position fermée et son mécanisme d'ouverture en position fermée;
- la figure 4, déjà commentée, représente un mécanisme d'armement et de fermeture en position désarmée dans une réalisation commune à l'état de la technique et à l'invention;
- la figure 5 représente le mécanisme d'armement et de fermeture de la figure 4, en position armée;

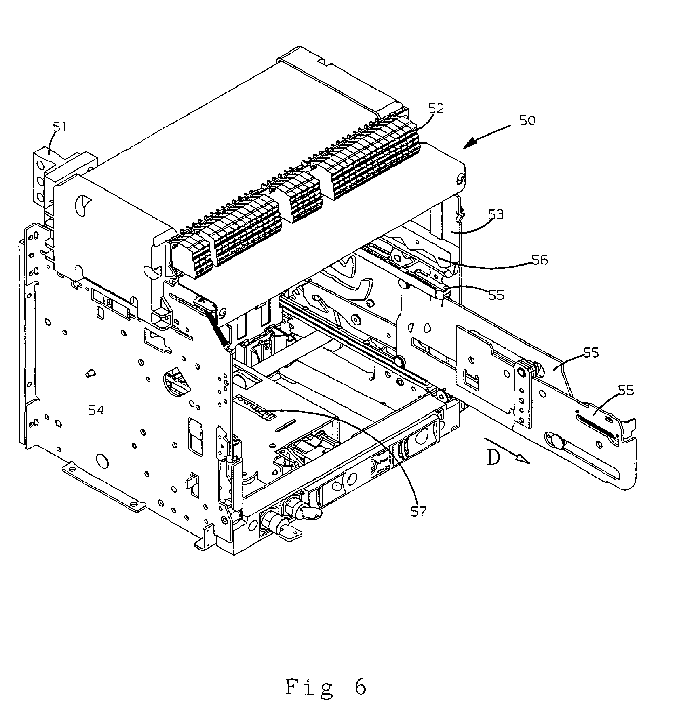

- la figure 6 représente en perspective un châssis pour un disjoncteur débrochable selon un premier mode de réalisation de l'invention;

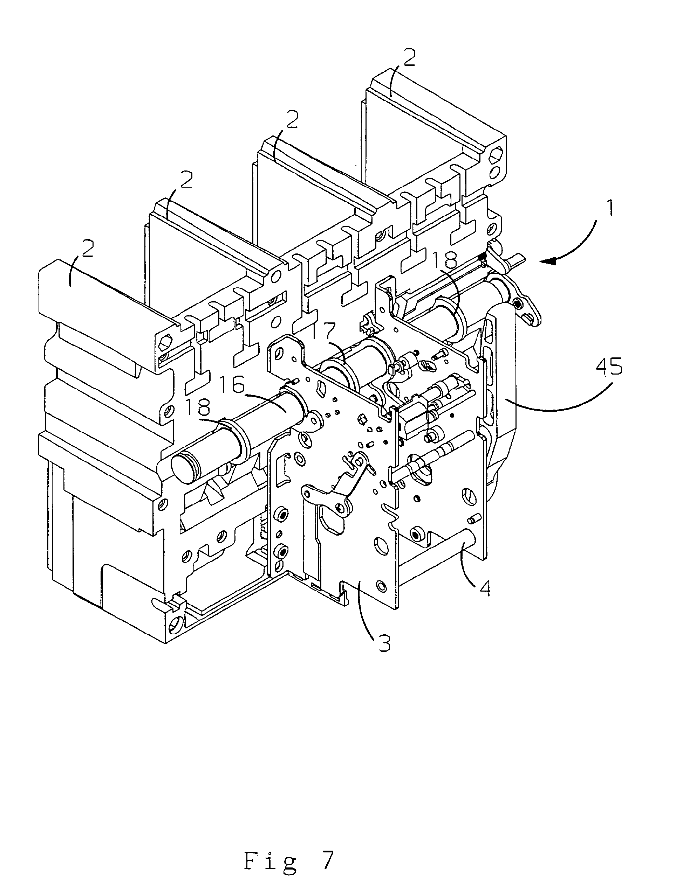

- la figure 7 représente en perspective le disjoncteur débrochable selon le premier mode de réalisation de l'invention, hors de son châssis, et montre en particulier un flasque latéral gauche;

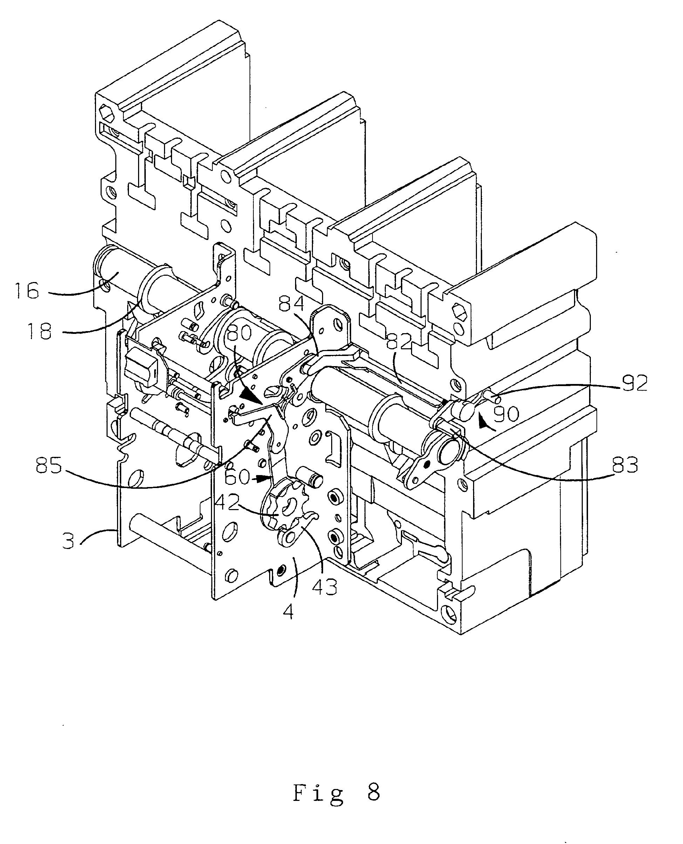

- la figure 8 représente, dans une autre perspective, le disjoncteur selon le premier mode de réalisation de l'invention hors de son châssis, montrant en particulier un flasque latéral droit supportant un organe d'accouplement;

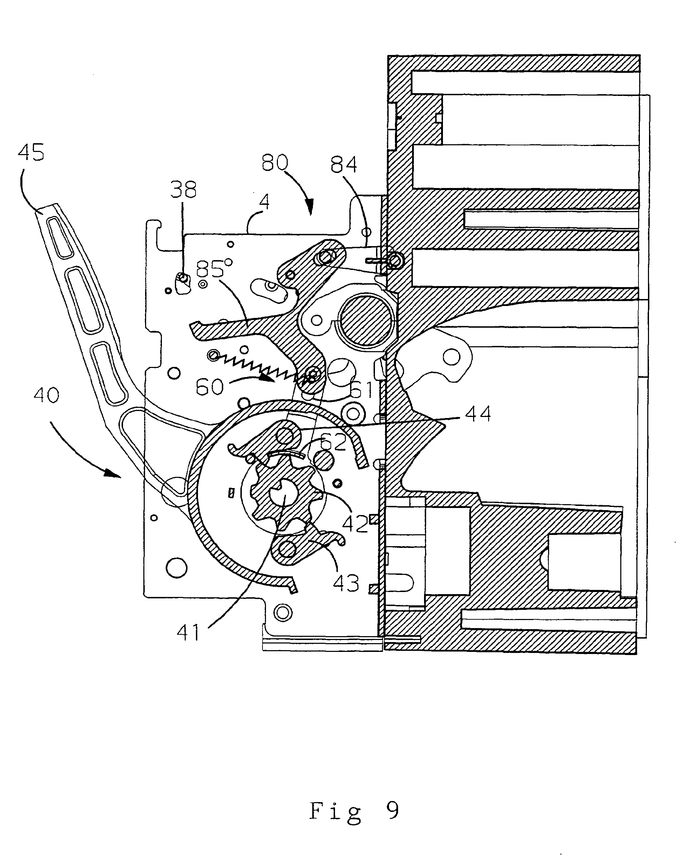

- la figure 9 est une vue en coupe dans un plan parallèle au flasque latéral droit de la partie mobile du disjoncteur selon le premier mode de réalisation de l'invention, montrant l'organe de commande de l'organe d'accouplement dans un état inactif;

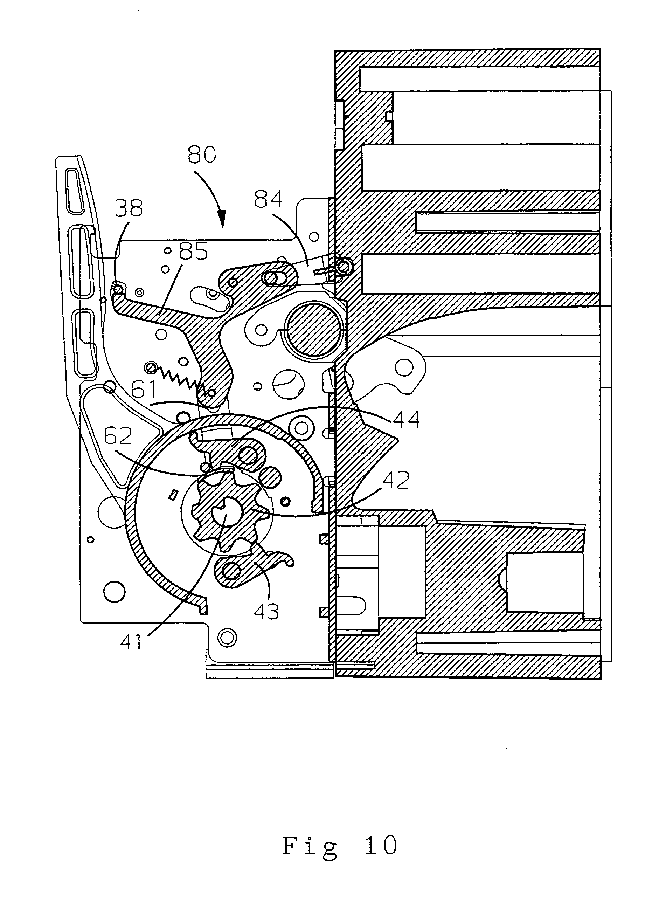

- la figure 10 est une vue en coupe dans un plan parallèle au flasque latéral droit de la partie mobile du disjoncteur selon le premier mode de réalisation de l'invention montrant l'organe de commande de l'organe d'accouplement dans un état actif;

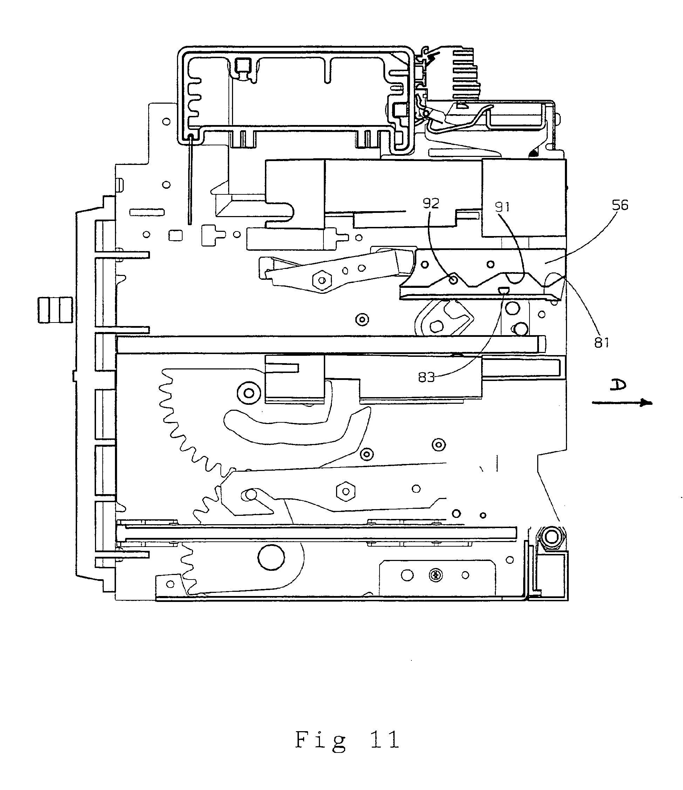

- les figure 11 à 14 sont des vues schématiques montrant la coopération de leviers de commande d'ouverture et de commande de fermeture avec une came portée par le châssis du disjoncteur selon le premier mode de réalisation de l'invention;

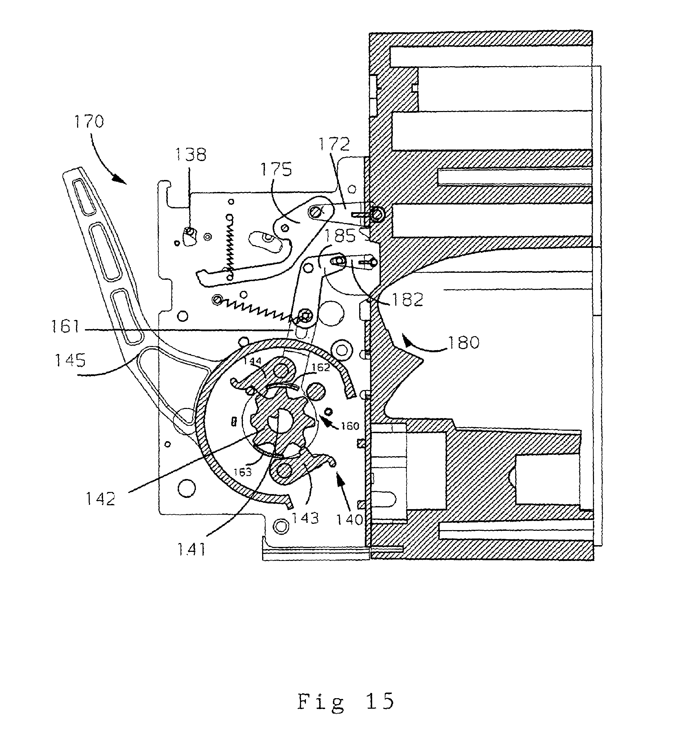

- la figure 15 est une vue d'un deuxième mode de réalisation de l'invention, correspondant à la figure 8 du premier mode;

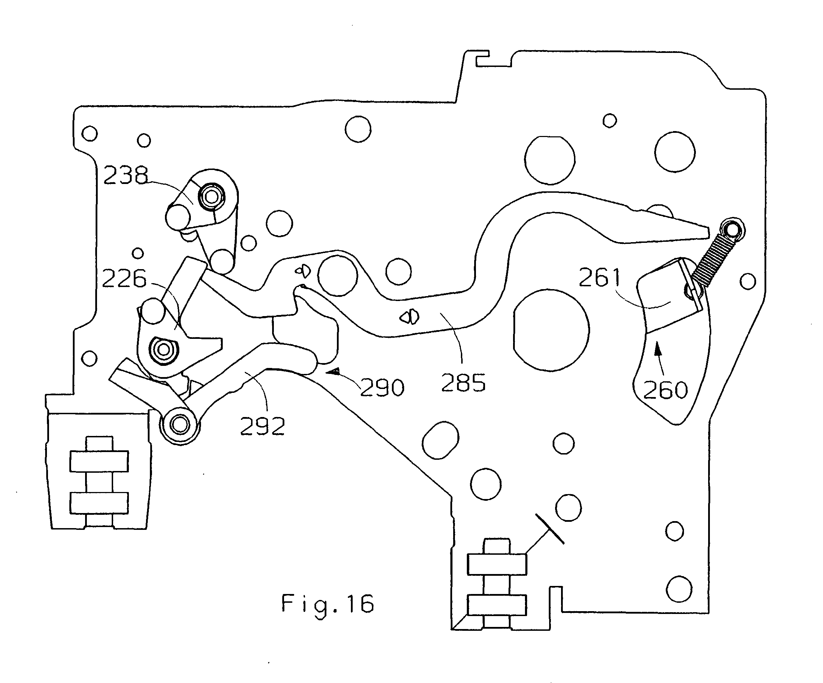

- la figure 16 est une vue schématique d'un troisième mode de réalisation de l'invention, avec un levier de commande unique en position inopérante;

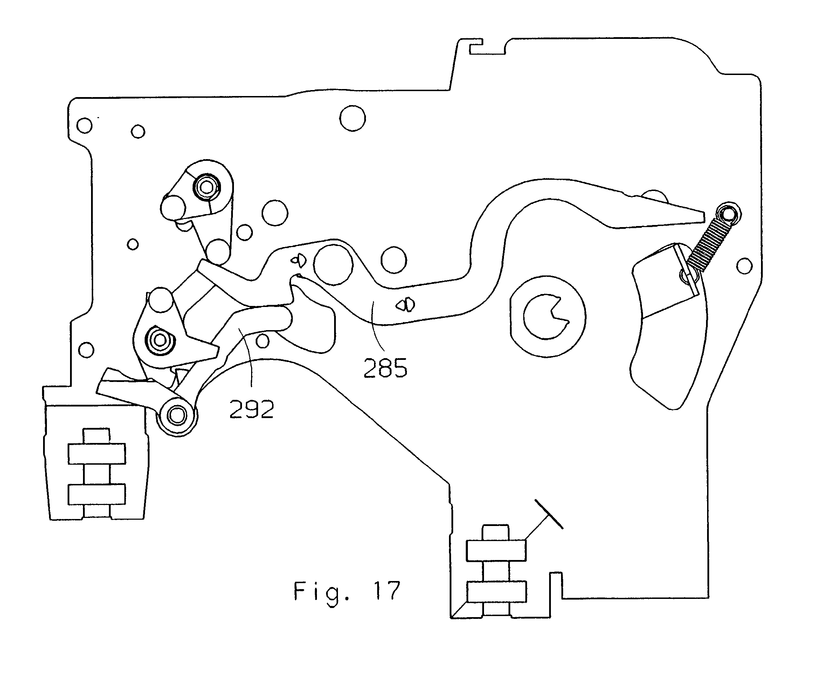

- la figure 17 est une vue schématique du troisième mode de réalisation de l'invention, avec le levier de commande unique en position de commande d'ouverture;

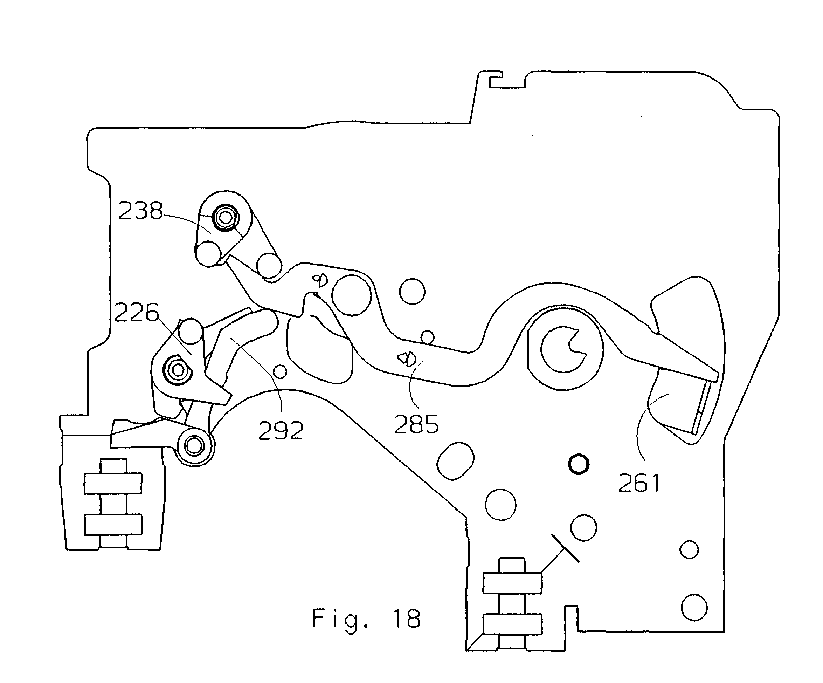

- la figure 18 est une vue schématique du troisième mode de réalisation de l'invention, avec le levier de commande unique en position de commande de fermeture;

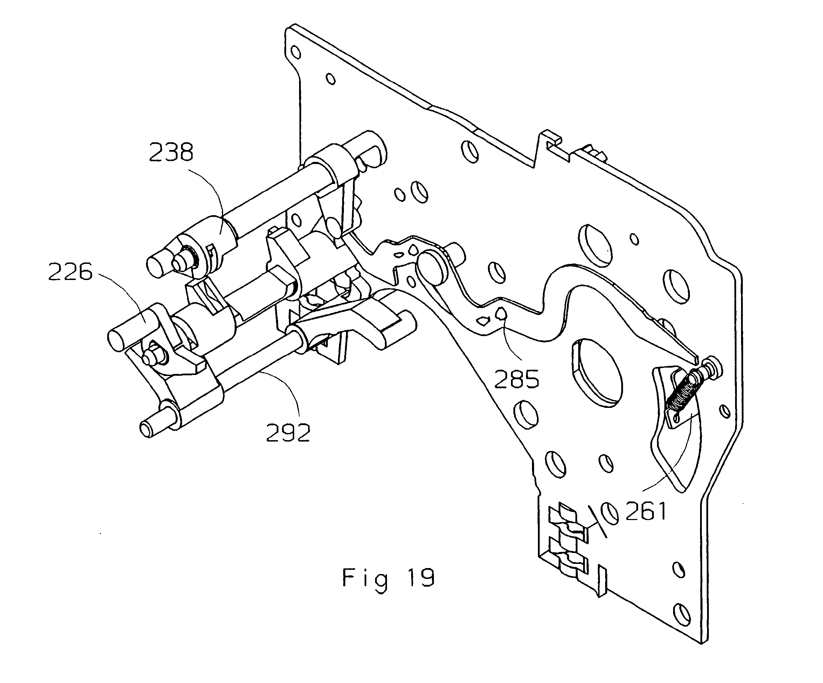

- la figure 19 est une vue en perspective du troisième mode de réalisation de l'invention, montrant plus particulièrement un mécanisme de commande comprenant le levier de commande unique;

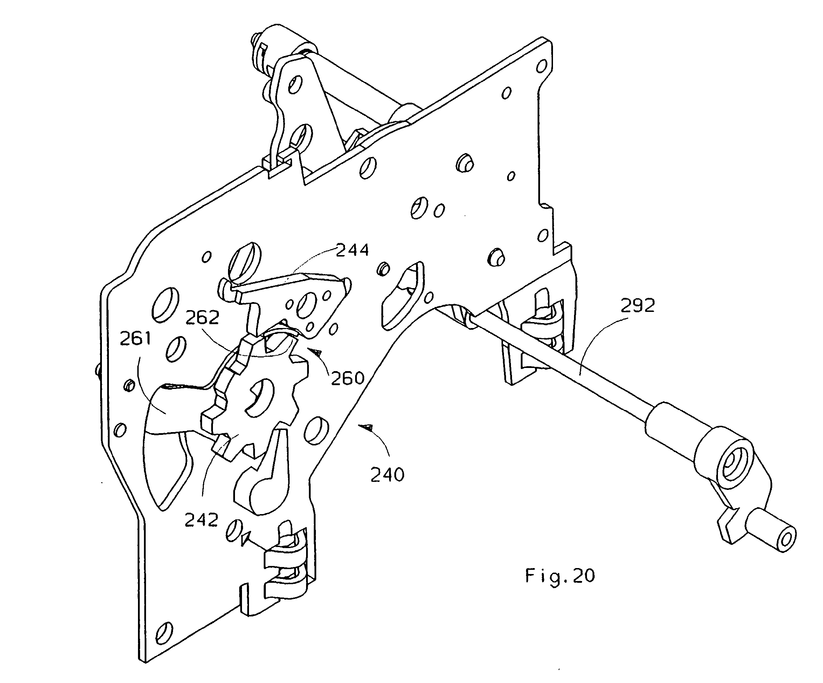

- la figure 20 est une vue en perspective du troisième mode de réalisation de l'invention, montrant plus particulièrement un mécanisme déclencheur;

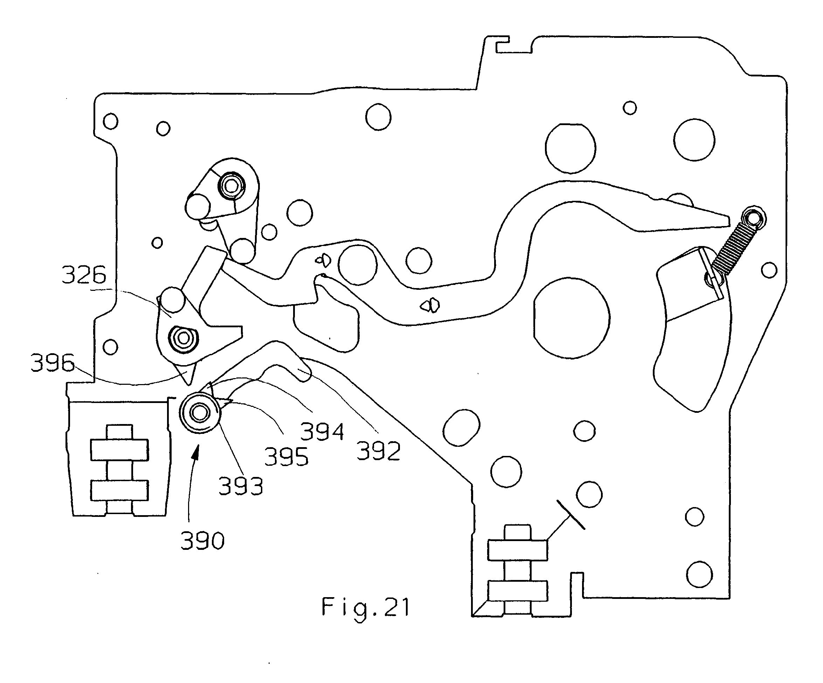

- la figure 21 est une vue de détail d'un verrou de commande unique d'un quatrième mode de réalisation de l'invention.

On a représenté en figure 6 le châssis externe fixe 50 d'un disjoncteur embrochable. Ce châssis comporte en face arrière des plages de raccordement électrique 51 à un jeu de barres du réseau de distribution électrique. Sur les parois latérales 53 et 54 du châssis sont disposées des glissières 55 destinées à supporter et guider le disjoncteur dans son mouvement de translation entre sa position extraite et sa position embrochée. Sur la paroi 3 est fixée une came 56. Le châssis comporte également dans sa partie inférieure un mécanisme d'embrochage comportant un arbre primaire longitudinal 57 dont l'extrémité libre est destinée à coopérer avec une manivelle de manoeuvre et un arbre transversal de renvoi 58 lié à l'arbre primaire 57 par une transmission à renvoi d'angle non représentée, l'arbre transversal 58 portant deux secteurs de roues dentés 59 engrenant chacun avec une came d'embrochage. La rotation de l'arbre primaire 57 assure de manière classique la rotation des cames qui entraînent chacune de façon réversible un galet du disjoncteur entre la position débrochée à la position embrochée.

Sur la figure 7 est représenté le disjoncteur 1 hors de son châssis externe 50. On distingue en partie postérieure les parois 2 de compartimentation des pôles du disjoncteur. Les pôles sont semblables dans leur construction à l'état de la technique des figures 1 à 5. La partie antérieure comporte un flasque gauche 3 et un flasque droit 4 servant de supports aux divers éléments du mécanisme d'ouverture 20 et du mécanisme d'armement et de fermeture 30.

La figure 7 montre également un levier oscillant 45 de manoeuvre constituant l'organe menant d'un mécanisme d'entraînement 40 de la came d'armement 46, l'organe mené étant l'arbre 41 (figure 4). Le levier 45 oscille autour de son axe géométrique de pivotement qui est confondu avec l'arbre 41, entre la position haute représentée sur la figure 7 et une position basse à 90° de la précédente. On voit en outre sur la figure 7 l'arbre des pôles 16 sur lequel est fixée la manivelle 17 qui est articulée d'une part avec une extrémité du mécanisme à genouillère 21 et d'autre part avec la bielle 13 d'un des pôles du disjoncteur. Pour les autre pôles, les bielles 13 sont articulées à des leviers 18 fixés à l'arbre des pôles 16.

Les éléments intermédiaires du mécanisme d'entraînement 40 de l'arbre 41 et de la came d'armement 46 sont visibles sur les figures 8 à 10. Sur la figure 8, le levier oscillant 45 a été ôté pour montrer une roue à rochet 42 clavetée à l'arbre 41. La roue à rochet 42 coopère avec un cliquet anti-retour 43 dont l'axe est supporté par le flasque 4. Ce cliquet 43 interdit la rotation de la roue à rochet dans le sens rétrograde sur la figure 8. La roue à rochet 42 et le cliquet 43 constituent donc ensemble un accouplement à roue libre entre l'arbre 41 ou la came d'armement 46 et le flasque de support 4 solidaire du disjoncteur 1.

Le levier oscillant 45 est solidaire d'une coupelle dont les rebords cylindriques sont visibles en coupe sur la figure 9 et dont le fond, non visible, s'étend dans le plan de la figure 9 et supporte l'axe d'un cliquet d'entraînement 44. Le cliquet 44 coopère avec la roue à rochet 42 de manière à s'opposer au mouvement rotatif de la roue à rochet 42 par rapport au cliquet 44 et au levier oscillant 45 dans le sens rétrograde. La roue à rochet 42 constitue donc avec le cliquet d'entraînement 44 un embrayage à roue libre entre l'organe menant 45 d'une part et l'arbre 41 ou la came 46 constituant un organe mené de l'autre.

Le disjoncteur comporte également un mécanisme déclencheur 60 comportant un levier cache cliquet 61 monté pivotant par rapport à l'axe de l'arbre 41. Ce cache cliquet 61 porte une plaque 62 s'étendant dans une direction sensiblement parallèle à l'axe de l'arbre 41. Suivant la position du levier cache cliquet 61, cette plaque 62 est mobile entre une position de retrait visible sur la figure 9 et une position active visible sur la figure 10.

Le disjoncteur comporte en outre une commande 80 conjointe du mécanisme déclencheur 60 et du verrou de fermeture 38. Une partie de la commande 80 est supportée par le châssis externe fixe 50 du disjoncteur et est constituée par une première surface 81 de la came 56 (figure 11). Une autre partie de la commande 80 est disposée sur le disjoncteur et comporte un levier 82 visible sur la figure 8 avec un bras menant 83 apte à coopérer avec la surface 81 et un bras mené 84 articulé à un levier intermédiaire 85 par une articulation à coulisse, l'articulation comportant un coulisseau solidaire du bras 84 et coulissant dans un trou oblong du levier intermédiaire 85. Ce levier intermédiaire est par ailleurs articulé au bras du levier cache cliquet 61 par une articulation à coulisse. Le levier intermédiaire 85 comporte également un bras apte à coopérer avec un doigt du verrou de fermeture 38. Il est clair que la commande 80 ne constitue pas l'unique commande de fermeture du disjoncteur. Elle se superpose naturellement à d'autres commandes de fermeture qui sortent du cadre de la présente invention, parmi lesquelles la commande par bouton poussoir en face avant du disjoncteur.

Le disjoncteur comporte également un mécanisme de commande 90 du verrou d'ouverture 26. Il apparaîtra clairement à l'homme du métier que cette commande 90 se superpose à une ou plusieurs autres commandes du verrou d'ouverture qui sortent du cadre de la présente invention et qui servent entre autres choses à piloter l'ouverture du disjoncteur en position embrochée (par bouton poussoir ou par commande électrique) ou entre la position embrochée et la position débrochée (par un jeu de leviers et de cames). Une partie de la commande 90 est disposée sur le châssis fixe et est constituée par une deuxième surface 91 de la came 56. Une autre partie de la commande est disposée en partie mobile et comporte un levier de commande 92 apte à coopérer avec la surface 91. Ce levier est rappelé par un ressort vers une position de repos. Il coopère directement sur le verrou d'ouverture de manière à ce que le mouvement du verrou contre la force de rappel de son ressort entraîne le verrou d'ouverture 26 vers sa position d'ouverture et qu'inversement le levier 92 dans sa position de repos n'interagisse pas avec le verrou d'ouverture 26, quelle que soit la position de celui-ci.
Le fonctionnement du dispositif est le suivant.

Entre la position embrochée et la position débrochée représentée sur la figure 11, la première surface 81 maintient le bras menant 83 du levier 82 en position haute, le levier intermédiaire 85 étant de ce fait maintenu dans la position de la figure 9 contre la force de son ressort de rappel. Dans cette position, la plaque 62 du cache cliquet 61 n'interagit pas avec le cliquet d'entraînement 44. De même, le levier intermédiaire 85 n'interagit pas avec le verrou de fermeture 38, quelle que soit la position de celui-ci. Par ailleurs, la deuxième surface 91 n'interagit pas avec le levier 92, celui-ci restant de ce fait dans sa position de repos dans laquelle il n'interagit pas avec le verrou d'ouverture 26, quelle que soit la position de celui-ci.

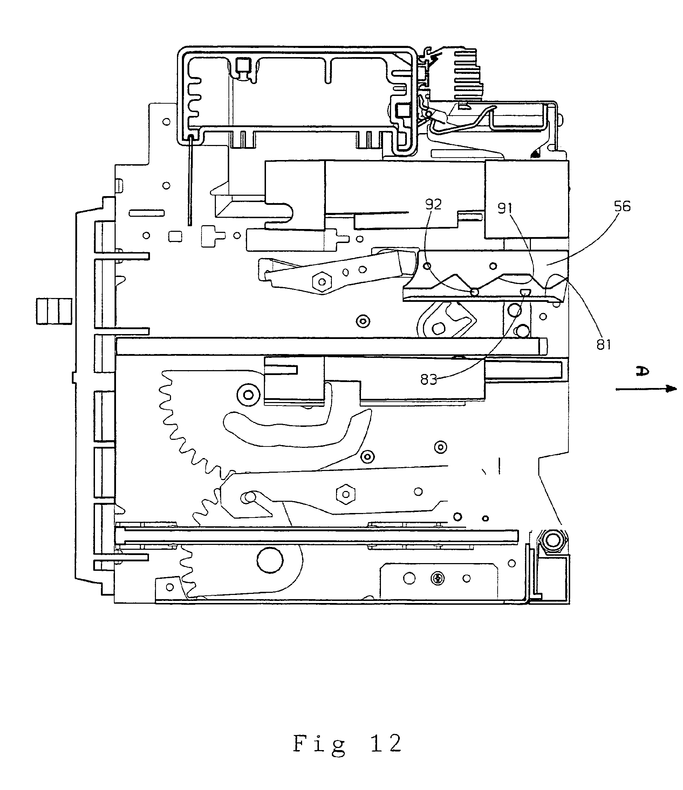

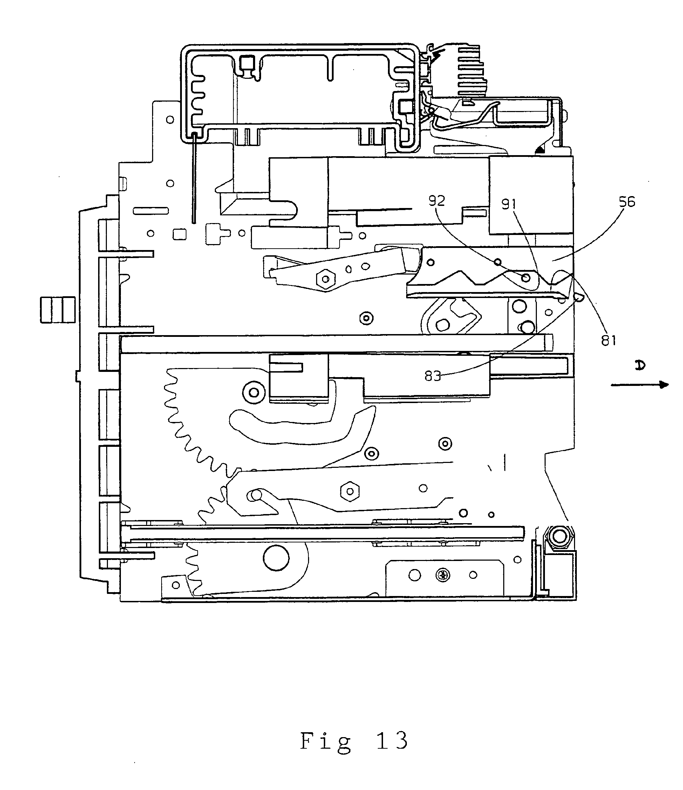

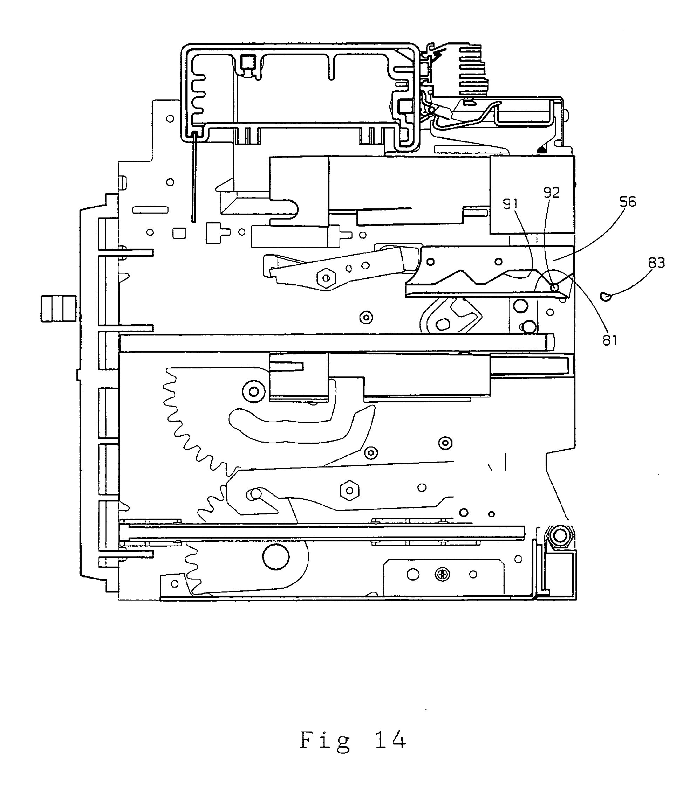

Lorsque le disjoncteur est progressivement sorti de son châssis de la position débrochée vers la position extraite dans la direction D, les leviers de commande 82 et 92 prennent successivement par rapport à la came 56 les positions représentées sur les figures 12 à 14. Dans une première phase, schématisée sur la figure 12, le mouvement du disjoncteur 1 hors du châssis 50 suivant la direction D provoque une coopération entre le levier de commande d'ouverture 92 et une rampe de la deuxième surface 91 de la came 56, entraînant le levier de commande d'ouverture 92 en position basse et provoquant ainsi l'ouverture du verrou d'ouverture 26. A l'issue de cette première phase, le mécanisme d'ouverture se retrouve soit dans son état ouvert désarmé de la figure 1, soit dans son état ouvert armé de la figure 2, suivant son état initial. Dans une deuxième phase, entre les positions des figures 12 et 13, le levier de commande d'ouverture 92 est libéré et sous la sollicitation de son ressort de rappel, reprend sa position de repos en libérant le verrou d'ouverture qui est sollicité vers sa position de repos par son propre ressort de rappel. Le verrou d'ouverture est alors en position verrouillée. Dans une troisième phase, schématisée sur la figure 13, le levier de commande 82 de la commande conjointe 80 du mécanisme déclencheur 60 et du verrou de fermeture 38, est libéré par la première surface 81 et, sous la sollicitation de son ressort de rappel, vient dans sa position basse. Le levier intermédiaire 85 pivote alors dans la position de la figure 10. A l'issue de ce pivotement, le verrou de fermeture 38, quelle qu'ait été sa position précédente, se retrouve bloqué dans sa position déverrouillée, alors que la plaque 62 du cache cliquet 61 est venue s'insérer entre la roue à rochet 42 et le cliquet d'entraînement 44. Du fait du déverrouillage du verrou de fermeture 38, le mécanisme d'armement et de fermeture 30, s'il était précédemment armé, se retrouve donc nécessairement dans sa position désarmée à la fin de cette phase alors que le mécanisme d'ouverture 20 passe dans son état fermé: dans ce cas en effet, les pôles 10 se ferment et le disjoncteur 1 se retrouve dans l'état des figures 3 et 4. A partir de ce moment, il n'est plus possible d'entraîner la came d'armement 46 du fait que le mécanisme d'entraînement 40 est neutralisé par le mécanisme déclencheur 60. La phase suivante de l'extraction est schématisée sur la figure 14: le levier de commande 92 du verrou d'ouverture est de nouveau sollicité par une rampe de la deuxième surface 91 de la came 56, et pivote en position basse en provoquant de nouveau l'ouverture du verrou d'ouverture 26. A l'issue de cette phase, l'appareil se retrouve donc nécessairement en position ouverte désarmée, qu'il ait été initialement en position ouverte ou fermée, armée ou désarmée. Enfin, dans une dernière phase de l'extraction, non représentée, le levier de commande d'ouverture 92 est libéré et, sous la sollicitation de son ressort de rappel, reprend sa position de repos en libérant le verrou d'ouverture qui reprend lui aussi sa position de repos sous la sollicitation de son propre ressort de rappel.

Le disjoncteur extrait est donc ouvert, désarmé, et l'action sur le levier oscillant n'a aucun effet sur le mécanisme d'armement. Le mécanisme ne peut plus être réarmé, même partiellement, et ne constitue plus un danger potentiel pour l'opérateur de maintenance. Toutefois, lorsque le disjoncteur est extrait de son châssis, les leviers de commandes 82 et 92 sont accessibles. Il est donc possible à l'opérateur averti de frauder en connaissance de cause le mécanisme déclencheur, en abaissant manuellement le levier de commande 82 et en le bloquant avec un outil. On obtient donc un système qui évite les fausses manoeuvres dangereuses par un opérateur non averti, sans pénaliser le spécialiste.

Les séquences décrites précédemment pour l'extraction sont réversibles lorsque le disjoncteur est poussé de sa position extraite à sa position débrochée.

Le premier mode décrit comprend une commande conjointe pour le verrou de fermeture et le mécanisme déclencheur, utilisant notamment le levier intermédiaire 85 à trois bras, permettant d'attaquer simultanément ou quasi-simultanément le verrou de fermeture et le levier cache cliquet. Il est toutefois envisageable de remplacer cette commande conjointe par deux commandes indépendantes, chacune pilotée par un levier de commande et une surface de la came fixée au châssis. Une telle solution est montrée schématiquement sur la figure 15 représentant un deuxième mode de réalisation de l'invention. Une commande 170 du verrou de fermeture 138 comporte un levier de commande 172 piloté par une rampe d'une came fixée sur le châssis de l'appareillage et un levier intermédiaire de renvoi 175 sollicité par un ressort de rappel. Le bras menant du levier de renvoi 175 est articulé au levier de commande 172 alors que son bras mené est apte à coopérer avec un doigt du verrou de fermeture 138. De même, la commande du mécanisme déclencheur 180 comprend un levier de commande 182 activé par une came fixée au châssis et par un levier intermédiaire de renvoi 185 sollicité par un ressort de rappel.
Cette solution est intéressante en particulier si l'on souhaite obtenir un séquencement net de la commande de déclenchement et de la commande de fermeture.

Par ailleurs, le deuxième mode de réalisation de l'invention diffère du premier par son mécanisme déclencheur 160, qui agit à la fois sur le cliquet d'entraînement 144 et sur le cliquet anti-retour 143 du mécanisme d'entraînement 140. Lorsque le levier intermédiaire 185 est entraîné par son ressort de rappel dans le sens rétrograde sur la figure 15, il entraîne le bras du cache cliquet 161 qui pivote dans le sens direct. Dans une première partie de sa course, une plaque 162 du cache cliquet efface le cliquet d'entraînement 144, puis dans une deuxième partie de sa course, une deuxième plaque 163 du cache cliquet efface le cliquet anti-retour 143. L'effacement du cliquet d'entraînement 144 a la même fonction de débrayage du levier oscillant 145 que dans le premier mode de réalisation. L'effacement du cliquet anti-retour 143 permet en outre de libérer l'arbre 141, donc de détendre le ressort de fermeture 134 si celui-ci était précédemment partiellement bandé. Du fait du séquencement des actions des deux plaques du cache cliquet, la détente du ressort de fermeture n'est pas transmise au levier oscillant 145, ce qui élimine tout risque d'accident. La came agissant sur le levier de commande 182 du mécanisme de déclenchement 160 comporte une première rampe permettant au cache cliquet 161 d'effectuer la première partie de sa course et une deuxième rampe permettant au cache cliquet d'effectuer la deuxième partie de sa course. Les cames du châssis de l'appareillage agissent sur les leviers de commande du verrou fermeture et de commande du mécanisme de déclenchement de telle manière que le déverrouillage du verrou de fermeture intervienne entre l'effacement du cliquet d'entraînement et l'effacement du cliquet anti-retour.

Naturellement, il est également possible de commander un mécanisme déclencheur du type décrit en liaison avec le deuxième mode de réalisation, par une commande conjointe du type décrit en liaison avec le premier mode de réalisation, en utilisant notamment un levier intermédiaire à trois bras.

Par ailleurs, il est également envisageable de n'utiliser qu'une seule plaque cache cliquet s'interposant entre le cliquet anti-retour et la roue à rochet. Dans ce cas, une oscillation du levier oscillant entraîne bien la came d'armement, mais la came revient à sa position désarmée lorsque le levier remonte à sa position haute, si bien que le ressort de fermeture ne parvient jamais dans son état armé.

Un troisième mode de réalisation de l'invention est visibles sur les figures 16 à 20. Ce mode de réalisation diffère du précédent essentiellement par le fait qu'un levier de commande unique 292 est utilisé pour une commande 290 conjointe du verrou d'ouverture 226, du mécanisme déclencheur 260 et du verrou de fermeture 238.

On retrouve sur les figures 16 et 19 un verrou d'ouverture 226, un verrou de fermeture 238 et un mécanisme déclencheur 260. Un levier de commande unique 292 est apte à prendre une position inopérante, une position de commande d'ouverture et une position de commande de fermeture, représentées respectivement sur les figures 16 à 18. Il est rappelé vers la position de commande de fermeture par un ressort de rappel. Un levier intermédiaire 285 à trois surfaces d'appui est apte à coopérer avec le levier de commande unique 292, le mécanisme déclencheur 260 et le verrou de fermeture 238. La figure 20 montre une partie du mécanisme d'entraînement 240 et du mécanisme déclencheur 260 qui sont similaires à ceux du premier mode de réalisation. On voit en particulier, entre la roue à rochet 242 et le cliquet d'entraînement 244 la plaque 262 du cache cliquet 261. Par soucis de clarté, certains éléments n'ont pas été représentés, notamment les ressorts de rappel des cliquets. On notera que le levier intermédiaire 285 n'est pas muni d'un ressort de rappel propre, les ressorts de rappel du verrou de fermeture d'une part et du cache cliquet d'autre part se révélant suffisants.

En position neutre (figure 16), le levier de commande unique 292 n'interfère ni avec le verrou d'ouverture 226, ni avec le levier intermédiaire 285. En passant dans sa position de commande d'ouverture, par pivotement dans le sens direct sur la figure 17, le levier de commande unique coopère par un ergot avec le verrou d'ouverture 226, et entraîne celui-ci dans sa position de déverrouillage. En passant dans sa position de commande de fermeture dans le sens direct sur la figure 18, le levier de commande unique 292 coopère avec le levier intermédiaire 285 et fait pivoter celui-ci dans le sens rétrograde sur la figure. Le levier intermédiaire 285 entraîne ainsi quasi-simultanément d'une part le verrou de fermeture 238 dans sa position de déverrouillage et d'autre part la plaque 262 du cache cliquet 261 dans une position telle qu'elle s'interpose entre le cliquet d'entraînement 244 et la roue à rochet 242.

Le fonctionnement du dispositif est le suivant. En position débrochée, le levier de commande unique 292 coopère avec une came du châssis qui le maintient en position inopérante, contre la sollicitation de son ressort de rappel. Lors de la séquence d'extraction à partir de la position débrochée, le levier de commande unique 292 entre en contact avec une première rampe d'une came solidaire du châssis, et pivote dans sa position de commande d'ouverture sous la sollicitation de son ressort de rappel. A l'issue de cette première séquence, le disjoncteur est ouvert, quel qu'ait été son état précédent. En poursuivant l'extraction, le levier de commande unique 292 est libéré et est entraîné par son ressort de rappel dans sa position de commande de fermeture. Il y a alors fermeture du disjoncteur à vide et interposition de la plaque 262 du cache cliquet 261 entre le cliquet d'entraînement 244 et la roue à rochet 242. Il est alors impossible de réarmer le dispositif.

Cette solution est suboptimale par rapport à la précédente, puisqu'elle n'évite pas la décharge à vide lors de l'extraction. Par contre elle empêche bien tout réarmement de l'appareil extrait, donc tout risque de décharge à vide de l'appareil extrait. Elle répond également au soucis de protection des opérateurs de maintenance.

Il est également possible sur la base d'un dispositif à levier de commande unique de réaliser, comme dans le dispositif du premier mode de réalisation, une séquence OFO lors de l'extraction. On a schématisé en figure 21 les modifications à apporter au dispositif des figures 16 à 20 pour obtenir ce résultat. Suivant ce mode de réalisation, un moyen de commande unique 390 comprend un levier de commande unique 392 qui peut prendre, par pivotement autour de son axe dans le sens direct, quatre positions: une position inopérante, une position de première commande d'ouverture, une position de commande de fermeture et une position de deuxième commande d'ouverture. Il est sollicité par un ressort de rappel vers sa position de deuxième commande d'ouverture. Au levier de commande unique 392 est solidarisé une came 393 en forme de disque comportant deux aspérités 394, 395 constituant chacune deux rampes à 45°. Ces aspérités sont aptes à coopérer avec un ergot 396 du verrou d'ouverture 326. Pour le reste, ce mode de réalisation est identique au mode des figures 16 à 20.

Lorsque le disjoncteur est en position débrochée, le levier de commande unique 392 coopère avec une surface d'une came fixée au châssis de l'appareillage. Lors de l'extraction, le levier rencontre une première rampe de cette came du châssis, qui lui permet de pivoter jusqu'à sa position de première commande d'ouverture sous la sollicitation de son ressort de rappel. Durant ce pivotement, la première aspérité 394 de la came 393 coopère avec l'ergot 396 du verrou d'ouverture 326 et fait pivoter le verrou dans sa position déverrouillé. A la fin de cette phase de pivotement du levier de commande unique 392, la première aspérité 394 n'est plus en contact avec l'ergot 396 du verrou d'ouverture 326. Le verrou d'ouverture 326 est apte à se refermer sous la sollicitation de son propre ressort de rappel. En poursuivant l'extraction du disjoncteur, le levier de commande unique 392 rencontre une deuxième rampe qui lui permet de pivoter jusqu'à sa position de commande de fermeture sous la sollicitation de son ressort de rappel. Comme dans le troisième mode de réalisation, ce pivotement provoque le pivotement d'un levier intermédiaire qui attaque quasi-simultanément le verrou de fermeture et le cache cliquet. En poursuivant l'extraction de l'appareil, le levier de commande unique 392 est libéré ce qui permet à la deuxième aspérité 395 de la came 393 de coopérer avec l'ergot 396 du verrou d'ouverture de manière analogue à la première aspérité, provoquant de nouveau un déverrouillage et un verrouillage du verrou d'ouverture.

Lors du passage de la position extraite à la position débrochée, la séquence est inverse, chaque étape étant en soi réversible.

Certains usages nationaux ne prescrivent pas de séquence de désarmement lors de l'extraction. Avec les dispositifs à levier unique des deuxième et quatrième mode de réalisation, il est toujours possible de se conformer à ces usages. Il suffit pour cela de disposer sur le disjoncteur une butée restreignant le pivotement du levier de commande unique et lui interdisant d'atteindre la position de commande de fermeture. On peut ainsi avec un appareil quasiment identique se conformer à différents usages. Le dispositif selon l'invention est très souple d'utilisation et permet de différer la différentiation entre les produits destinés à différents marchés.

Enfin, certaines variantes apparaîtront immédiatement à l'homme du métier. Par exemple, il est clair que les leviers de commande 82 et 92 peuvent être remplacés par tout autre élément mobile supporté par le disjoncteur 1, par exemple par des tirettes mobiles en translation.

## Revendications

1. Appareillage de coupure débrochable comportant un châssis fixe (50) et un disjoncteur mobile (1) dans le châssis fixe (50) entre une position débrochée et une position embrochée, le disjoncteur (1) comportant au moins une paire de contacts (11, 12) dont l'un (12) au moins est mobile et peut prendre par rapport à l'autre (11) une position de fermeture et une position d'ouverture, un mécanisme d'armement et de fermeture (30) comportant un ressort dit de fermeture (34) apte à passer d'un état armé à un état libéré, un verrou dit de fermeture (38, 138, 238) apte à verrouiller le ressort de fermeture (34) dans son état armé, le ressort de fermeture (34) étant associé au contact mobile (12) de façon à ce que la détente du ressort de fermeture (34) entraîne le contact mobile (12) vers sa position de fermeture, un mécanisme d'entraînement (40, 140, 240) comportant un organe menant (45, 145), **caractérisé en ce que** le mécanisme d'entraînement (40, 140, 240) comporte un mécanisme déclencheur (60, 160, 260) qui est apte à passer d'un état d'enclenchement dans lequel l'actionnement de l'organe menant (45, 145) est apte à amener le ressort de fermeture (34) dans son état armé, à un état de déclenchement dans lequel l'actionnement de l'organe menant (45, 245) n'est pas apte à amener le ressort de fermeture (34) dans son état armé.

2. Appareillage selon la revendication 1, **caractérisé en ce que** le disjoncteur est également mobile entre la position débrochée et la position extraite, la position débrochée étant située entre la position embrochée et la position extraite et **en ce que** l'appareillage comporte un moyen de commande (80, 180, 290, 390) du mécanisme déclencheur (60, 160, 260), apte à détecter le fait que le disjoncteur (1) passe par une position intermédiaire dite de déclenchement entre la position débrochée et une position extraite, dans le sens de l'extraction, et faire passer dans ce cas le mécanisme déclencheur (60, 160, 260) dans son état de déclenchement et **en ce qu'**il comporte un moyen de commande du verrou de fermeture (80, 170, 290, 390) apte à détecter le fait que le disjoncteur (1) passe par une position intermédiaire dite de fermeture entre la position débrochée et la position extraite, dans le sens de l'extraction, et à entraîner dans ce cas le verrou de fermeture (38, 138, 238) vers sa position de déverrouillage, la position intermédiaire de déclenchement étant située entre la position débrochée et la position intermédiaire de fermeture, ou étant sensiblement confondue avec cette dernière.

3. Appareillage selon la revendication 1 ou la revendication 2, **caractérisé en ce qu'**il comporte en outre un mécanisme d'ouverture (20) comportant un ressort dit d'ouverture (24) apte à passer d'un état armé à un état libéré et de l'état libéré à l'état armé, et un verrou dit d'ouverture (26, 126, 226, 326) apte à verrouiller le ressort d'ouverture (24) dans son état armé, le ressort d'ouverture (24) étant associé au contact mobile (12) de façon à ce que la détente du ressort d'ouverture (24) entraîne le contact mobile (12) vers une position d'ouverture et à ce que le déplacement du contact mobile (12) vers sa position de fermeture entraîne l'armement du ressort d'ouverture (24), et **en ce qu'**il comporte un moyen de commande du verrou d'ouverture (90, 190, 390) apte à détecter le fait que le disjoncteur (1) passe par une position intermédiaire dite de première ouverture entre la position débrochée et la position de déclenchement, dans le sens de l'extraction, et à entraîner dans ce cas le verrou d'ouverture (26, 126, 326) vers sa position de déverrouillage, ledit moyen de commande du verrou d'ouverture (90, 190, 390) étant apte en outre à détecter le fait que le disjoncteur (1) passe par une position intermédiaire dite de deuxième ouverture entre la position de fermeture et la position extraite, dans le sens de l'extraction, et à entraîner dans ce cas le verrou d'ouverture (26) vers sa position de déverrouillage.

4. Appareillage selon l'une quelconque des revendications 2 à 4, **caractérisé en ce que** la position intermédiaire de fermeture et la position intermédiaire de déclenchement sont sensiblement confondues et **en ce que** le moyen de commande du verrou de fermeture (80, 290, 390) et le moyen de commande du mécanisme déclencheur (80, 290, 390) ont en commun un élément mobile (82, 292, 392) supporté par le disjoncteur (1) entre une position passive et une position de commande de déclenchement, et au moins une came (56) supportée par le châssis fixe (50), l'élément mobile (82, 292, 392) coopérant avec une surface (81) de commande de déclenchement de la came (56) de façon à passer de sa position passive à sa position de commande de déclenchement lors du passage du disjoncteur par la position intermédiaire commune de fermeture et de déclenchement, dans le sens de l'extraction.

5. Appareillage selon l'une quelconque des revendications 2 à 4, **caractérisé en ce qu'**il comporte en outre un mécanisme d'ouverture (20) comportant un ressort dit d'ouverture (24) apte à passer d'un état armé à un état libéré et de l'état libéré à l'état armé, et un verrou dit d'ouverture (26) apte à verrouiller le ressort d'ouverture dans son état armé, le ressort d'ouverture (24) étant associé au contact mobile (12) de façon à ce que la détente du ressort d'ouverture (24) entraîne le contact mobile (12) vers une position d'ouverture et à ce que le déplacement du contact mobile (12) vers sa position de fermeture entraîne l'armement du ressort d'ouverture (24), **en ce qu'**il comporte un moyen de commande du verrou d'ouverture (290) apte à détecter le fait que le disjoncteur passe par une position intermédiaire dite de première ouverture entre la position débrochée et la position de déclenchement, dans le sens de l'extraction, et à entraîner dans ce cas le verrou d'ouverture vers sa position de déverrouillage, et **en ce que** le moyen de commande du verrou d'ouverture (290, 390) et le moyen de commande du mécanisme déclencheur (290, 390) ont en commun un élément mobile (292, 392) supporté par le disjoncteur (1) entre une position passive et une position de commande de déclenchement, en passant par une position de commande de première ouverture située entre les deux autres et au moins une came (56) supportée par le châssis fixe (50), l'élément mobile (292) coopérant avec une surface de commande de première ouverture de la came (56) de façon à passer de sa position passive à sa position de commande de première ouverture lors du passage du disjoncteur par la position intermédiaire d'ouverture, dans le sens de l'extraction, l'élément mobile (292, 392) coopérant avec une surface de commande de déclenchement (81) de la came (56) de façon à passer dans sa position de première ouverture à sa position de commande de déclenchement lors du passage du disjoncteur par la position intermédiaire de déclenchement, dans le sens de l'extraction.

6. Appareillage selon l'une quelconque des revendications précédentes, **caractérisé en ce que** l'organe menant (45) est rotatif, **en ce que** le mécanisme d'entraînement (40) comprend au moins un embrayage à roue libre apte à transmettre le mouvement de l'organe menant (45) dans un sens de rotation de celui-ci et à ne pas le transmettre dans l'autre sens de rotation, et **en ce que** le mécanisme déclencheur (60) dans son état de déclenchement est apte à neutraliser ledit embrayage à roue libre de sorte que la rotation de l'organe menant (45) ne soit transmise dans aucun des deux sens de rotation.

7. Appareillage selon la revendication 6, **caractérisé en ce que** l'embrayage à roue libre comporte au moins au moins une pièce mobile (44) entre une position d'enclenchement dans laquelle elle permet la transmission du mouvement de l'organe menant (45) et une position de déclenchement dans laquelle elle ne permet pas la transmission du mouvement de l'organe menant (45) et **en ce que** le mécanisme déclencheur (60) comprend un verrou de blocage (62) de ladite pièce mobile (44) de l'embrayage à roue libre en position de déclenchement.

8. Appareillage selon l'une quelconque des revendications précédentes, **caractérisé en ce que en ce que** le mécanisme d'entraînement (140) comporte un organe mené rotatif (146) et au moins un accouplement à roue libre (142, 143) apte à interdire la rotation de l'organe mené dans un sens, et **en ce que** le mécanisme déclencheur (160) dans son état de déclenchement est apte à neutraliser ledit accouplement à roue libre (142,143) de sorte que la rotation de l'organe mené soit possible dans les deux sens.

9. Appareillage de coupure débrochable, en particulier appareillage selon la revendication 1, comportant un châssis fixe (50) et un disjoncteur mobile (1) dans le châssis fixe entre une position débrochée et une position embrochée, le disjoncteur comportant au moins une paire de contacts (11, 12) dont l'un (12) au moins est mobile et peut prendre par rapport à l'autre (11) une position de fermeture et une position d'ouverture, un mécanisme d'armement et de fermeture (30) comportant un ressort dit de fermeture (34) apte à passer d'un état armé à un état libéré, un verrou dit de fermeture (38) apte à verrouiller le ressort de fermeture (34) dans son état armé, le ressort de fermeture (34) étant associé au contact mobile (12) de façon à ce que la détente du ressort de fermeture (34) entraîne le contact mobile (12) vers sa position de fermeture, un mécanisme d'ouverture (20) comportant un ressort dit d'ouverture (24) apte à passer d'un état armé à un état libéré et de l'état libéré à l'état armé, et un verrou dit d'ouverture (26) apte à verrouiller le ressort d'ouverture (24) dans son état armé, le ressort d'ouverture (24) étant associé au contact mobile (12) de façon à ce que la détente du ressort d'ouverture (24) entraîne le contact mobile (12) vers une position d'ouverture et à ce que le déplacement du contact mobile (12) vers sa position de fermeture entraîne l'armement du ressort d'ouverture (24), ledit appareillage comportant un moyen de commande du verrou d'ouverture (90) apte à détecter le fait que le disjoncteur (1) passe par une position intermédiaire dite de première ouverture entre la position débrochée et la position extraite, dans le sens de l'extraction, et à entraîner dans ce cas le verrou d'ouverture (26) vers sa position de déverrouillage et un moyen de commande du verrou de fermeture (80) apte à détecter le fait que le disjoncteur passe par une position intermédiaire dite de fermeture entre la position de première ouverture et la position extraite, dans le sens de l'extraction, et à entraîner dans ce cas le verrou de fermeture (38) vers sa position de déverrouillage, **caractérisé en ce que** le verrou d'ouverture est apte à repasser dans sa position de verrouillage avant que le disjoncteur ne passe par sa position intermédiaire de fermeture, dans le sens de l'extraction et **en ce que** ledit moyen de commande du verrou d'ouverture (90) est apte en outre à détecter le fait que le disjoncteur (1) passe par une position intermédiaire dite de deuxième ouverture entre la position de fermeture et la position extraite, dans le sens de l'extraction, et à entraîner dans ce cas le verrou d'ouverture vers sa position de déverrouillage.

10. Appareillage selon la revendication 9, **caractérisé en ce que** le moyen de commande du verrou d'ouverture (90) est apte à détecter le fait que le disjoncteur (1) passe par la position intermédiaire de deuxième ouverture dans le sens de l'embrochage, et à entraîner dans ce cas le verrou d'ouverture (26) vers sa position de déverrouillage, **en ce que** le verrou d'ouverture est apte à repasser dans sa position de verrouillage avant que le disjoncteur ne passe par sa position intermédiaire de fermeture, dans le sens de l'embrochage, **en ce que** le moyen de commande du verrou de fermeture (80) est apte à détecter le fait que le disjoncteur passe par la position intermédiaire dite de fermeture dans le sens de l'embrochage, et à entraîner dans ce cas le verrou de fermeture (38) vers sa position de déverrouillage, et **en ce que** le moyen de commande du verrou d'ouverture (90) est apte à détecter le fait que le disjoncteur (1) passe par la position intermédiaire de première ouverture dans le sens de l'embrochage, et à entraîner dans ce cas le verrou d'ouverture vers sa position de déverrouillage.

## Claims

1. Plug-in switchgear apparatus comprising a fixed frame (50) and a circuit breaker (1) movable in the fixed frame (50) between a plugged-out position and a plugged-in position, the circuit breaker (1) comprising at least one pair of contacts (11, 12) at least one (12) of which is movable and can take with respect to the other (11) a closed position and an open position, a loading and closing mechanism (30) comprising a spring called the closing spring (34) designed to move from a loaded state to a released state, a latch called the closing latch (38, 138, 238) designed to latch the closing spring (34) in its loaded state, the closing spring (34) being associated to the movable contact (12) in such a way that relaxation of the closing spring (34) drives the movable contact (12) to its closed position, a drive mechanism (40, 140, 240) comprising a driving part (45, 145), **characterized in that** the drive mechanism (40, 140, 240) comprises a trip mechanism (60, 160, 260) which is designed to move from a closed state wherein actuation of the drive part (45, 145) is designed to move the closing spring (34) to its loaded state, to a tripped state wherein actuation of the drive part (45, 245) is designed not to move the closing spring (34) to its loaded state.

2. Switchgear apparatus according to claim 1, **characterized in that** the circuit breaker (1) is also movable between the plugged-out position and an extracted position, the plugged-out position being between the plugged-in and the extracted position it comprises a control means (80, 180, 290, 390) of the trip mechanism (60, 160, 260) able to detect the fact that the circuit breaker (1) passes via an intermediate position called the tripped position between the plugged-out position and the extracted position, in the extraction direction, and in this case to move the trip mechanism (60, 160, 260) to its tripped state, and that it comprises a control means of the closing latch (80, 170, 290, 390) able to detect the fact that the circuit breaker (1) passes via an intermediate position called the closed position between the plugged-out position and the extracted position, in the extraction direction, and in this case to drive the closing latch (38, 138, 238) to its unlatched position, the intermediate tripped position being situated between the plugged-out position and the intermediate closed position, or being appreciably the same as the latter position.

3. Switchgear apparatus according to claim 1 or 2, **characterized in that** it comprises in addition an opening mechanism (20) comprising a spring called the opening spring (24) able to move from a loaded state to a released state and from the released state to the loaded state, and a latch called the opening latch (26, 126, 226, 326) designed to latch the opening spring (24) in its loaded state, the opening spring (24) being associated to the movable contact (12) in such a way that relaxation of the opening spring (24) drives the movable contact (12) to an open position and that movement of the movable contact (12) to its closed position results in loading of the opening spring (24), and **in that** it comprises a control means of the opening latch (90, 190, 390) able to detect the fact that the circuit breaker (1) passes via an intermediate position called the first open position between the plugged-out position and the tripped position, in the extraction direction, and in this case to drive the opening latch (26, 126, 326) to its unlatched position, said opening latch control means (90, 190, 390) being moreover designed to detect the fact that the circuit breaker (1) passes via an intermediate position called the second open position between the closed position and the extracted position, in the extraction direction, and in this case to drive the opening latch (26) to its unlatched position.

4. Switchgear apparatus according to any one of the claims 2 to 4, **characterized in that** the intermediate closed position and the intermediate tripped position are appreciably identical and the closing latch control means (80, 290, 390) and the trip mechanism control means (80, 290, 390) have in common a movable element (82, 292, 392) supported by the circuit breaker (1) between a passive position and a tripping command position, and at least one cam (56) supported by the fixed frame (50), the movable element (82, 292, 392) operating in conjunction with a tripping command surface (81) of the cam (56) so as to move from its passive position to its tripping command position when the circuit breaker passes via the common intermediate closed and tripped position, in the extraction direction.

5. Switchgear apparatus according to any one of the claims 2 to 4, **characterized in that** it comprises in addition an opening mechanism (20) comprising a spring called the opening spring (24) able to move from a loaded state to a released state and from the released state to the loaded state, and a latch called the opening latch (26) designed to latch the opening spring in its loaded state, the opening spring (24) being associated to the movable contact (12) in such a way that relaxation of the opening spring (24) drives the movable contact (12) to an open position and **in that** movement of the movable contact (12) to its closed position results in loading of the opening spring (24), and **in that** it comprises a control means of the opening latch (290) able to detect the fact that the circuit breaker passes via an intermediate position called the first open position between the plugged-out position and the tripped position, in the extraction direction, and in this case to drive the opening latch to its unlatched position, and **in that** the opening latch control means (290, 390) and the trip mechanism control means (290, 390) have in common a movable element (292, 392) supported by the circuit breaker (1) between a passive position and a tripping command position, passing via a first opening control position situated between the other two positions and at least one cam (56) supported by the fixed frame (50), the movable element (292) operating in conjunction with a first opening command surface of the cam (56) in such a way as to move from its passive position to its first opening control position when the circuit breaker passes via the intermediate open position, in the extraction direction, the movable element (292, 392) operating in conjunction with a tripping command surface (81) of the cam (56) so as to move from its first open position to its tripping command position when the circuit breaker passes via the intermediate tripped position, in the extraction direction.

6. Switchgear apparatus according to any one of the foregoing claims, **characterized in that** the drive part (45) is rotary, that the drive mechanism (40) comprises at least one free-wheel clutch designed to transmit the movement of the drive part (45) in one direction of rotation of the latter and not to transmit it in the other direction of rotation, and that the trip mechanism (60) in its tripped state is designed to neutralize said free-wheel clutch so that rotation of the drive part (45) is not transmitted in either of the two rotation directions.

7. Switchgear apparatus according to claim 6, **characterized in that** the free-wheel clutch comprises at least one movable part (44) movable between a closed position enabling transmission of the movement of the drive part (45) and a tripped position not enabling transmission of the movement of the drive part (45), and that the trip mechanism (60) comprises a blocking plate (62) for blocking said movable part (44) of the free-wheel clutch in the tripped position.

8. Switchgear apparatus according to any one of the foregoing claims, **characterized in that** the drive mechanism (140) comprises a rotary driven part (146) and at least one free-wheel coupling (142, 143) designed to prevent rotation of the driven part in one direction, and that the trip mechanism (160) in its tripped state is designed to neutralize said free-wheel coupling (142, 143) so that rotation of the driven part is possible in both directions.

9. Plug-in switchgear apparatus, in particular the switchgear apparatus according to claim 1, comprising a fixed frame (50) and a circuit breaker (1) movable in the fixed frame between a plugged-out position and a plugged-in position, the circuit breaker comprising at least one pair of contacts (11, 12) at least one (12) of which is movable and can take with respect to the other (11) a closed position and an open position, a loading and closing mechanism (30) comprising a spring called the closing spring (34) designed to move from a loaded state to a released state, a latch called the closing latch (38) designed to latch the closing spring (34) in its loaded state, the closing spring (34) being associated to the movable contact (12) in such a way that relaxation of the closing spring (34) drives the movable contact (12) to its closed position, an opening mechanism (20) comprising a spring called the opening spring (24) able to move from a loaded state to a released state and from the released state to the loaded state, and a latch called the opening latch (26) designed to latch the opening spring (24) in its loaded state, the opening spring (24) being associated to the movable contact (12) in such a way that relaxation of the opening spring (24) drives the movable contact (12) to an open position and that movement of the movable contact (12) to its closed position results in loading of the opening spring (24), said switchgear apparatus comprising a control means (90) of the opening latch able to detect the fact that the circuit breaker (1) passes via an intermediate position called the first open position between the plugged-out position and the extracted position, in the extraction direction, and in this case to drive the opening latch (26) to its unlatched position, and a control means (80) of the closing latch able to detect the fact that the circuit breaker passes via an intermediate position called the closed position between the first open position and the extracted position, in the extraction direction, and in this case to drive the closing latch (38) to its unlatched position, **characterized in that** the opening latch is designed to revert to its latching position before the circuit breaker passes via its intermediate closed position, in the extraction direction, and **in that** said opening latch control means (90) is moreover designed to detect the fact that the circuit breaker (1) passes via an intermediate position called the second open position between the closed position and the extracted position, in the extraction direction, and in this case to drive the opening latch to its unlatched position.

10. Switchgear apparatus according to claim 9, **characterized in that** the opening latch control means (90) is able to detect the fact that the circuit breaker (1) passes via the intermediate second open position in the plug-in direction, and in this case to drive the opening latch (26) to its unlatched position, that the opening latch is designed to revert to its latched position before the circuit breaker passes via its intermediate closed position, in the plug-in direction, that the closing latch control means (80) is able to detect the fact that the circuit breaker passes via the intermediate position called the closed position in the plug-in direction, and in this case to drive the closing latch (38) to its unlatched position, and that the opening latch control means (90) is able to detect the fact that the circuit breaker (1) passes via the intermediate first open position in the plug-in direction, and in this case to drive the opening latch to its unlatched position.

## Patentansprüche

1. Schaltgerät in Einschubtechnik mit einem feststehenden Chassis (50) und einem zwischen einer Trennstellung und einer Betriebsstellung im Chassis verschiebbaren Leistungsschalter (1), welcher Leistungsschalter (1) mindestens zwei Schaltstücke (11, 12), von denen mindestens eines (12) beweglich ausgeführt ist und in Bezug zum anderen Schaltstück (11) eine Einschaltstellung und eine Ausschaltstellung einnehmen kann, einen Spann- und Einschaltmechanismus (30) mit einer als Einschaltfeder bezeichneten Feder (34), die dazu ausgelegt ist, von einem gespannten Zustand in einen entspannten Zustand überzugehen, eine als Einschaltsperre bezeichnete Sperre (38, 138, 238), die dazu ausgelegt ist, die Einschaltfeder (34) in ihrem Gespanntzustand zu verriegeln, wobei die Einschaltfeder (34) so mit dem beweglichen Schaltstück (12) zusammenwirkt, dass die Entspannung der Einschaltfeder (34) das bewegliche Schaltstück (12) in dessen Einschaltstellung überführt, und einen Antriebsmechanismus (40, 140, 240) mit einem Antriebsorgan (45, 145) umfasst, **dadurch gekennzeichnet, dass** der Antriebsmechanismus (40, 140, 240) einen Auslösemechanismus (60, 160, 260) umfasst, der dazu ausgelegt ist, von einer Kopplungsstellung, in der die Einschaltfeder (34) durch Betätigung des Antriebsorgans (45, 145) in ihren Gespanntzustand überführt werden kann, in eine Entkopplungsstellung überzugehen, in der die Einschaltfeder (34) nicht durch Betätigung des Antriebsorgans (45, 245) in ihren Gespanntzustand überführt werden kann.

2. Schaltgerät nach Anspruch 1, **dadurch gekennzeichnet, dass** der Leistungsschalter auch zwischen der Trennstellung und der Ausfahrstellung verschoben werden kann, wobei die Trennstellung zwischen der Betriebsstellung und der Ausfahrstellung angeordnet ist, dadurch dass das Schaltgerät ein Steuermittel (80, 180, 290, 390) zur Ansteuerung des Auslösemechanismus' (60, 160, 260) umfasst, das in der Lage ist zu erkennen, wenn der Leistungsschalter (1) in Ausfahrrichtung gesehen eine zwischen der Trennstellung und der Ausfahrstellung angeordnete, so genannte Entkopplungs-Zwischenstellung passiert, und in diesem Fall den Auslösemechanismus (60, 160, 260) in seinen Entkopplungszustand zu überführen, und dadurch dass es ein Steuermittel zur Ansteuerung der Einschaltsperre (80, 170, 290, 390) umfasst, das in der Lage ist zu erkennen, wenn der Leistungsschalter (1) in Ausfahrrichtung gesehen eine zwischen der Trennstellung und der Ausfahrstellung angeordnete so genannte Einschalt-Zwischenstellung passiert und in diesem Fall die Einschaltsperre (38, 138, 238) in ihre Entriegelungsstellung zu überführen, wobei die Entkopplungs-Zwischenstellung zwischen der Trennstellung und der Einschalt-Zwischenstellung liegt oder annähernd mit letztgenannter identisch ist.

3. Schaltgerät nach Anspruch 1 oder Anspruch 2, **dadurch gekennzeichnet, dass** es außerdem einen Ausschaltmechanismus (20) mit einer als Ausschaltfeder bezeichneten Feder (24), die dazu ausgelegt ist, von einem gespannten Zustand in einen entspannten Zustand überzugehen, sowie eine als Ausschaltsperre bezeichnete Sperre (26, 126, 226, 326) umfasst, die in der Lage ist, die Ausschaltfeder (24) in ihrem Gespanntzustand zu verriegeln, wobei die Ausschaltfeder (24) so mit dem beweglichen Schaltstück (12) zusammenwirkt, dass die Entspannung der Ausschaltfeder (24) das bewegliche Schaltstück (12) in eine Ausschaltstellung überführt und dass die Verschiebung des beweglichen Schaltstücks (12) in seine Einschaltstellung das Spannen der Ausschaltfeder (24) bewirkt, und dadurch dass es ein Steuermittel zur Ansteuerung der Ausschaltsperre (90, 190, 390) umfasst, das in der Lage ist zu erkennen, wenn der Leistungsschalter (1) in Ausfahrrichtung gesehen eine zwischen der Trennstellung und der Entkopplungsstellung angeordnete, so genannte erste Ausschalt-Zwischenstellung passiert, und in diesem Fall die Ausschaltsperre (26, 126, 326) in ihre Entriegelungsstellung zu überführen, wobei das genannte Steuermittel zur Ansteuerung der Ausschaltsperre (90, 190, 390) außerdem in der Lage ist zu erkennen, wenn der Leistungsschalter (1) in Ausfahrrichtung gesehen eine zwischen der Einschaltstellung und der Ausfahrstellung angeordnete, so genannte zweite Ausschalt-Zwischenstellung passiert, und in diesem Fall die Ausschaltsperre (26) in ihre Entriegelungsstellung überführt.

4. Schaltgerät nach irgendeinem der Ansprüche 2 bis 4, **dadurch gekennzeichnet, dass** die Einschalt-Zwischenstellung und die Entkopplungs-Zwischenstellung annähernd deckungsgleich sind und dass das Steuermittel zur Ansteuerung der Einschaltsperre (80, 290, 390) sowie das Steuermittel zur Ansteuerung des Auslösemechanismus' (80, 290, 390) ein gemeinsames bewegliches Element (82, 292, 392), das am Leistungsschalter (1) befestigt ist und zwischen einer passiven Stellung und einer Entkopplungs-Steuerstellung verschoben werden kann, sowie mindestens eine am feststehenden Chassis (50) befestigte Steuerkurve (56) aufweisen, wobei das bewegliche Element (82, 292 392) so mit einer Entkopplungs-Steuerfläche (81) der Steuerkurve (56) zusammenwirkt, dass es von seiner passiven Stellung in seine Entkopplungs-Steuerstellung übergeht, wenn der Leistungsschalter in Ausfahrrichtung gesehen die deckungsgleiche Einschalt-/Entkopplungs-Zwischenstellung passiert.

5. Schaltgerät nach irgendeinem der Ansprüche 2 bis 4, **dadurch gekennzeichnet, dass** es außerdem einen Ausschaltmechanismus (20) mit einer als Ausschaltfeder bezeichneten Feder (24), die dazu ausgelegt ist, von einem gespannten Zustand in einen entspannten Zustand überzugehen, sowie eine als Ausschaltsperre bezeichnete Sperre (26) umfasst, die in der Lage ist, die Ausschaltfeder in ihrem Gespanntzustand zu verriegeln, wobei die Ausschaltfeder (24) so mit dem beweglichen Schaltstück (12) zusammenwirkt, dass die Entspannung der Ausschaltfeder (24) das bewegliche Schaltstück (12) in eine Ausschaltstellung überführt und dass die Verschiebung des beweglichen Schaltstücks (12) in seine Einschaltstellung das Spannen der Ausschaltfeder (24) bewirkt, **dadurch** dass es ein Steuermittel zur Ansteuerung der Ausschaltsperre (290) umfasst, das in der Lage ist zu erkennen, wenn der Leistungsschalter in Ausfahrrichtung gesehen eine zwischen der Trennstellung und der Entkopplungsstellung angeordnete, so genannte erste Ausschalt-Zwischenstellung passiert, und in diesem Fall die Ausschaltsperre in ihre Entriegelungsstellung zu überführen, und dadurch dass das Steuermittel zur Ansteuerung der Ausschaltsperre (290, 390) und das Steuermittel zur Ansteuerung des Auslösemechanismus' (290, 390) ein am Leistungsschalter (1) befestigtes gemeinsames bewegliches Element (292, 392), das zwischen einer passiven Stellung und einer Entkopplungs-Steuerstellung verschoben werden kann und dabei eine zwischen den beiden anderen Stellungen angeordnete erste Ausschalt-Steuerstellung passiert, sowie mindestens eine am feststehenden Chassis (50) befestigte Steuerkurve (56) umfassen, wobei das bewegliche Element (292) so mit einer der ersten Ausschaltsteuerung zugeordneten Fläche der Steuerkurve (56) zusammenwirkt, dass es von seiner passiven Stellung in seine erste Ausschalt-Steuerstellung übergeht, wenn der Leistungsschalter in Ausfahrrichtung gesehen die Ausschalt-Zwischenstellung passiert, und das bewegliche Element (292, 392) so mit einer der Entkopplungssteuerung zugeordneten Fläche (81) der Steuerkurve (56) zusammenwirkt, dass es von seiner ersten Ausschalt-Steuerstellung in seine Entkopplungs-Steuerstellung übergeht, wenn der Leistungsschalter in Ausfahrrichtung gesehen die Entkopplungs-Zwischenstellung passiert.

6. Schaltgerät nach irgendeinem der vorhergehenden Ansprüche, **dadurch gekennzeichnet, dass** das Antriebsorgan (45) als Drehteil ausgebildet ist, dass der Antriebsmechanismus (40) mindestens eine Freilaufkupplung umfasst, die in der Lage ist, die Bewegung des Antriebsorgans (45) in einer seiner Drehrichtungen zu übertragen und in der anderen Drehrichtung nicht, und dass der Auslösemechanismus (60) in seinem Entkopplungszustand in der Lage ist, die genannte Freilaufkupplung zu neutralisieren, so dass die Drehung des Antriebsorgans (45) in keiner der beiden Drehrichtungen übertragen wird.

7. Schaltgerät nach Anspruch 6, **dadurch gekennzeichnet, dass** die Freilaufkupplung mindestens ein bewegliches Teil (44) umfasst, das zwischen einer Kopplungsstellung, in der es die Übertragung der Bewegung des Antriebsorgans (44) erlaubt, und einer Entkopplungsstellung verschoben werden kann, in der es die Übertragung der Bewegung des Antriebsorgans (45) nicht erlaubt, und dass der Auslösemechanismus (60) eine Sperre (62) zur Blockierung des genannten beweglichen Teils (44) der Freilaufkupplung in der Entkopplungsstellung umfasst.

8. Schaltgerät nach irgendeinem der vorhergehenden Ansprüche, **dadurch gekennzeichnet, dass** der Antriebsmechanismus (140) ein als Drehteil ausgebildetes Abtriebsorgan (146) und mindestens eine Freilaufkupplung (142, 143) umfasst, die in der Lage ist, die Drehung des Abtriebsorgans in einer Richtung zu verhindern, und dass der Auslösemechanismus (160) in seinem Entkopplungszustand in der Lage ist, die genannte Freilaufkupplung (142, 143) zu neutralisieren, so dass die Drehung des Abtriebsorgans in beiden Drehrichtungen möglich ist.

9. Elektrisches Schaltgerät in Einschubtechnik, insbesondere Schaltgerät gemäß Anspruch 1 mit einem feststehenden Chassis (50) und einem zwischen einer Trennstellung und einer Betriebsstellung im Chassis verschiebbaren Leistungsschalter (1), welcher Leistungsschalter mindestens zwei Schaltstücke (11, 12), von denen mindestens eines (12) beweglich ausgeführt ist und in Bezug zum anderen Schaltstück (11) eine Einschaltstellung und eine Ausschaltstellung einnehmen kann, einen Spann- und Einschaltmechanismus (30) mit einer als Einschaltfeder bezeichneten Feder (34), die dazu ausgelegt ist, von einem Gespanntzustand in einen Entspanntzustand überzugehen, eine als Einschaltsperre bezeichnete Sperre (38), die dazu ausgelegt ist, die Einschaltfeder (34) in ihrem Gespanntzustand zu verriegeln, wobei die Einschaltfeder (34) so mit dem beweglichen Schaltstück (12) zusammenwirkt, dass die Entspannung der Einschaltfeder (34) das bewegliche Schaltstück (12) in dessen Einschaltstellung überführt, einen Ausschaltmechanismus (20) mit einer als Ausschaltfeder bezeichneten Feder (24), die dazu ausgelegt ist, von einem Gespanntzustand in einen Entspanntzustand und vom Entspanntzustand in den Gespanntzustand überzugehen, sowie eine als Ausschaltsperre bezeichnete Sperre (26) umfasst, die dazu ausgelegt ist, die Ausschaltfeder (24) in ihrem Gespanntzustand zu verriegeln, wobei die Ausschaltfeder (24) so mit dem beweglichen Schaltstück (12) zusammenwirkt, dass die Entspannung der Ausschaltfeder (24) das bewegliche Schaltstück (12) in eine Ausschaltstellung überführt und dass die Verschiebung des beweglichen Schaltstücks (12) in die Einschaltstellung das Spannen der Ausschaltfeder (24) bewirkt, welches genannte Schaltgerät ein Steuermittel zur Ansteuerung der Ausschaltsperre (90), das in der Lage ist zu erkennen, wenn der Leistungsschalter (1) in Ausfahrrichtung gesehen eine zwischen der Trennstellung und der Ausfahrstellung angeordnete, so genannte erste Ausschalt-Zwischenstellung passiert, und in diesem Fall die Ausschaltsperre (26) in ihre Entriegelungsstellung zu überführen, sowie ein Steuermittel zur Ansteuerung der Einschaltsperre (80) umfasst, das in der Lage ist zu erkennen, wenn der Leistungsschalter (1) in Ausfahrrichtung gesehen eine zwischen der ersten Ausschaltstellung und der Ausfahrstellung angeordnete, so genannte Einschalt-Zwischenstellung passiert, und in diesem Fall die Einschaltsperre (38) in ihre Entriegelungsstellung zu überführen, **dadurch gekennzeichnet, dass** die Ausschaltsperre in ihre Verriegelungsstellung zurückkehren kann, bevor der Leistungsschalter (1) in Ausfahrrichtung gesehen seine Einschalt-Zwischenstellung passiert, und dadurch, dass das genannte Steuermittel zur Ansteuerung der Ausschaltsperre (90) darüber hinaus in der Lage ist zu erkennen, wenn der Leistungsschalter (1) in Ausfahrrichtung gesehen eine zwischen der Einschaltstellung und der Ausfahrstellung angeordnete, so genannte zweite Ausschalt-Zwischenstellung passiert, und in diesem Fall die Ausschaltsperre in ihre Entriegelungsstellung zu überführen.

10. Schaltgerät nach Anspruch 9, **dadurch gekennzeichnet, dass** das Steuermittel zur Ansteuerung der Ausschaltsperre (90) in der Lage ist zu erkennen, wenn der Leistungsschalter (1) in Einfahrrichtung gesehen die zweite Ausschalt-Zwischenstellung passiert, und in diesem Fall die Ausschaltsperre (26) in ihre Entriegelungsstellung zu überführen, dass die Ausschaltsperre in der Lage ist, in ihre Verriegelungsstellung zurückzukehren, bevor der Leistungsschalter in Einfahrrichtung gesehen seine Einschalt-Zwischenstellung passiert, dass das Steuermittel zur Ansteuerung der Einschaltsperre (80) in der Lage ist zu erkennen, wenn der Leistungsschalter in Einfahrrichtung gesehen die so genannte Einschalt-Zwischenstellung passiert, und in diesem Fall die Einschaltsperre (38) in ihre Entriegelungsstellung zu überführen, und dadurch dass das Steuermittel zur Ansteuerung der Ausschaltsperre (90) in der Lage ist zu erkennen, wenn der Leistungsschalter (1) in Einfahrrichtung gesehen die erste Ausschalt-Zwischenstellung passiert, und in diesem Fall die Ausschaltsperre in ihre Entriegelungsstellung zu überführen.
